# EUROPÄISCHE PATENTSCHRIFT

(11) **EP 2 631 033 B1**
(45) Veröffentlichungstag und Bekanntmachung des Hinweises auf die Patenterteilung: **16.09.2015**
(21) Anmeldenummer: 12189650.0
(22) Anmeldetag: 23.10.2012
(51) Int. Cl.: B23Q 3/08, B23Q 3/06, B24B 13/00, B24B 13/005, B24B 27/00

(54) **Verfahren und Vorrichtung zur Bearbeitung von Brillenglasrohlingen**
Method and device for machining spectacle lens blanks
Procédé et dispositif destinés au traitement d'ébauches de verres à lunettes

(30) Priorität: 27.02.2012 DE 102012101581
(43) Veröffentlichungstag der Anmeldung: 28.08.2013
(73) Patentinhaber: Opto Tech Optikmaschinen GmbH, 35435 Wettenberg (DE)
(72) Erfinder: Mandler, Roland, 35452 Heuchelheim (DE)
(74) Vertreter: Patentanwälte Olbricht Buchhold Keulertz

(56) Entgegenhaltungen:
- DE-A1- 19 504 368
- DE-A1-102007 031 703
- DE-C- 951 259
- FR-A1- 2 575 101
- GB-A- 332 245

## Beschreibung

Die Erfindung betrifft eine Vorrichtung zur Bearbeitung von Brillenglasrohlingen gemäß Anspruch 1, ein Verfahren zur Bearbeitung von Brillenglasrohlingen mittels einer solchen Vorrichtung nach Anspruch 12, sowie eine Verwendung einer solchen Vorrichtung zur Bearbeitung von Brillenglasrohlingen nach Anspruch 22.

Brillengläser werden meist aus kreisrunden Brillenglasrohlingen hergestellt, deren Durchmesser üblicherweise deutlich größer sind, als es den Abmessungen des daraus herzustellenden Brillenglases entsprechen würde. Ursache hierfür ist die divergierende Größe von Brillengläsern. Bei den Brillenglasrohlingen handelt es sich entweder um Rohteile (beide Seiten ohne optische Wirkung) oder um Halbfertigteile (eine Seite mit optischer Wirkung) aus Kunststoff oder Mineralglas. Die Bearbeitung erfolgt durch spanabhebende Bearbeitung auf Fräs-, Dreh-, Schleif- bzw. Poliermaschinen.

Zur Bearbeitung müssen die Brillenglasrohlinge an Werkstückaufnahmen der Bearbeitungsmaschinen festgespannt werden. Damit außer der zentralen Bearbeitungsfläche auch der Randbereich für die Bearbeitung zugänglich bleibt, werden die Brillenglasrohlinge bei den bekannten Bearbeitungsverfahren je nachdem welche Seite zu bearbeiten ist entweder mit der Vorder- oder Rückseite an sogenannten Blockstücken befestigt. Dieser Vorgang wird Aufblocken genannt. Die aufgeblockte Seite ist somit die Aufnahmeseite und verfügt meist bereits über eine optisch wirksame Oberfläche, welche entweder durch mechanische Bearbeitung hergestellt wurde oder an dem Halbfertigteil durch spanlose Formgebungsverfahren bereits ausgebildet ist.

An der Aufnahmeseite verfügen die Blockstücke über eine strukturierte Verbindungsfläche für das Aufblocken. Zum Aufblocken werden das Blockstück und der Brillenglasrohling in einer Vorrichtung so eingespannt, dass zwischen beiden ein Spalt verbleibt. Dieser wird mit einem geschmolzenen Verbindungsmaterial ausgefüllt. Dabei verwendet man Wood'sches Metall, Schwermetall Alloy, UV-aushärtbaren Klebstoff oder andere Materialien wie z.B. Wachs. Das Verbindungsmaterial haftet nach dem Aushärten an der strukturierten Verbindungsfläche des Blockstücks durch Form- und/oder Haftschluss und an der Aufnahmeseite des Brillenglasrohlings durch Adhäsionskräfte (Klebwirkung), wobei oftmals eine Schutzlackschicht oder eine Schutzfolie auf dem Brillenglasrohling die Klebwirkung unterstützt.

Von Nachteil hierbei ist, dass das Aufblocken zeit- und kostenintensiv ist. Außerdem entstehen pro aufgeblockten Brillenglasrohling mit Schwermetall circa 2g Schwund bei der Bearbeitung. Dies entspricht einem Umwelteintrag von circa 500-700 t Schwermetall bei der Fertigung von 500 Mio. Brillengläsern pro Jahr. Bei einer Verwendung von UV-aushärtendem Klebstoff entstehen circa 12.000 t - 15.000 t Kunststoffabfall im Jahr.

Ein anderer Nachteil der Wachs- und Kunststoffblockverfahren ist eine Beeinträchtigung bereits vorhandener optisch wirksamer Oberflächen aufgrund von hohem Wärmeeintrag beim Aufblocken.

Weiterhin haben die Blockstücke einen Spannrand in Form einer zylinderförmigen Umfangsfläche, mit dem sie in den Spannwerkzeugen der Bearbeitungsmaschinen festgespannt werden. Nach dem Aufblocken wird das Blockstück mit dem daran befestigten Brillenglasrohling in/an einer Bearbeitungsmaschine befestigt.

Aus dem Stand der Technik sind verschiedene Bearbeitungsmaschinen bekannt. So beschreibt WO 2004/080653 A1 Fräswerkzeuge mit Walzen- oder Fingerfräsern und/oder Drehwerkzeuge mit Drehmeißeln. Zur feineren Bearbeitung der Oberfläche werden anschließend Schleif- und/oder Poliermaschinen eingesetzt. Die Maschinen sind entweder CNC-gesteuerte mehrachsige Bearbeitungsmaschinen oder Roboter.

Nach der Rand- und Flächenbearbeitung durch Fräsen und Drehen wird die optische Oberfläche feinstgeschliffen und poliert. Hierfür fahren die Werkzeuge während der Bearbeitung über den Rand des verbliebenen Brillenglasrohlings hinaus. Hierdurch entsteht eine Kantenpressung, bei welcher im Randbereich ein unerwünscht großer Materialabtrag stattfindet. Die vorher erzeugte präzise Linsengeometrie wird dabei beschädigt. Dieses Einebnen der Linsengeometrie im Randbereich ist ein erheblicher optischer Nachteil.

Ein weiterer Nachteil besteht darin, dass die Brillengläser nach der Randbearbeitung am Umfang nicht mehr kreisrund sind, sondern in etwa den verschiedenen Formen und Größen der Brillenfassungen entsprechen. Dies führt zu ganz erheblichen Mehrkosten, da nach dem Abblocken völlig individuell geformte Werkstücke (Brillenglasrohlinge/Brillengläser) durch die weitere Fertigung laufen. Dementsprechend hoch ist der Aufwand für die Spanneinrichtungen aller nachfolgenden Transport- und Bearbeitungseinrichtungen. Gerade nach dem Abblocken sind noch weitere Arbeitsschritte erforderlich. So müssen die abgeblockten Brillengläser z.B. gewaschen werden, bevor ein Coating aufgebracht wird. Zum Waschen müssen sie in Rahmen eingespannt werden, während sie beim Coating in Masken liegen.

Der Erfindung liegt die Aufgabe zugrunde, die Nachteile des Standes der Technik zu überwinden und eine Vorrichtung zur Bearbeitung von Brillengläsern zu entwickeln, mit der eine schnelle und kostengünstige Fertigung von Brillengläsern möglich ist, deren optische Oberflächen eine hohe Qualität aufweisen und deren Dicke minimiert ist. Insbesondere zu beachten sind hierbei auch Lager- und Vorhaltungskosten für Werkzeuge, Haltevorrichtungen und Material. Weiterhin soll ein Verfahren zur Bearbeitung mittels einer solchen Vorrichtung bereitgestellt werden.

Hauptmerkmale der Erfindung sind in den Ansprüchen 1, 12 und 22 angegeben. Ausgestaltungen sind Gegenstand der Ansprüche 2 bis 11 und 13 bis 21.

Die Erfindung betrifft eine Vorrichtung zur Bearbeitung von Brillenglasrohlingen, mit einem um eine Hauptdrehachse drehbar gelagerten Werkstückrevolver mit wenigstens zwei außerhalb der Hauptdrehachse angeordneten sowie um Spindelachsen drehbar am Werkstückrevolver gelagerten Werkstückaufnahmen, wobei jede Werkstückaufnahme eine Werkstückaufnahmefläche mit einer um die Spindelachse rotationssymmetrischen Oberflächenkrümmung aufweist, und wobei sich die Oberflächenkrümmungen der Werkstückaufnahmeflächen unterscheiden.

Mit einem solchen Werkstückrevolver ist es nunmehr möglich Brillenglasrohlinge mit unterschiedlichen Oberflächenkrümmungen aufzunehmen. Ein aufgenommener Brillenglasrohling wird so während einer anschließenden Bearbeitung stets aus Richtung der nicht zu bearbeitenden Aufnahmeseite durch die Werkstückaufnahmefläche gestützt. Entsprechend präzise kann die zu bearbeitende Oberflächengeometrie gefertigt werden. Mittels der unterschiedlichen Oberflächenkrümmungen lässt sich die Dicke von gefertigten Brillengläsern minimieren.

Weiterhin erfolgt die Werkstückaufnahme unmittelbar in der Vorrichtung und nicht wie beim Aufblocken durch vorgelagerte und teilweise manuelle Arbeitsschritte. Entsprechend ist die Bearbeitungsgeschwindigkeit hoch. Die Werkstückaufnahmen sind auch stets am Werkstückrevolver und müssen nicht gesucht oder gewechselt werden. Zusätzlich fallen weniger Abfälle als bei einem Aufblocken an.

Vorzugsweise ist die Werkstückaufnahmefläche konkav ausgebildet. In diesem Falle können Brillenglasrohlinge mit konvexer Vorderseite, d.h. konvexer Aufnahmeseite, aufgenommen werden. Auf der Vorderseite eines Brillenglases wird aus Designanforderungen meist eine harmonische gleichmäßige Oberfläche gewünscht. Dahingegen sind Unebenheiten auf der Rückseite zur Behebung von Sehfehlern aus Designgründen weniger störend. Die Vorderseite sollte nach Möglichkeit bereits optisch wirksam sein. Diese ist dann nicht weiter zu bearbeiten, was Zeit und Kosten einspart.

Gemäß einer erfindungsgemäßen näheren Ausgestaltung ist der Werkstückrevolver um 360 Grad drehbar um dessen Hauptdrehachse gelagert. Somit kann jeweils der kürze Weg/kleinere Drehwinkel bei einem Verdrehen des Werkstückrevolvers um die Hauptdrehachse gewählt werden, um die verschiedenen Werkstückaufnahmen zu positionieren. Die Verdrehung ist so besonders schnell. Außerdem kann der Werkstückrevolver getaktet und umlaufend um die Hauptdrehachse gedreht werden. In den verschiedenen Haltepositionen können unterschiedliche Bearbeitungsschritte erfolgen. Nicht gebrauchte Werkstückaufnahmen können dabei auch übersprungen werden. Es ist so möglich, gleichzeitig unterschiedliche Brillenglasrohlinge mit unterschiedlichen Oberflächenkrümmungen aufzunehmen und Werkzeugen zuzuführen.

Als ausgenommen praxistauglich erweist sich weiterhin eine Ausrichtung der Hauptdrehachse des Werkstückrevolvers in horizontaler geodätischer Richtung. Auf diese Weise kann die gesamte Vorrichtung ohne Steighilfen für Wartung und Reinigung zugänglich aufgebaut werden.

Besonders geeignet ist eine Auslegung des Werkstückrevolvers mit sechs Werkstückaufnahmen. Mit sechs unterschiedlichen Werkstückaufnahmeflächen können sechs unterschiedliche Rohlingtypen aufgenommen werden. Sechs Rohlingtypen sind ausreichend, um circa 90 % aller nachgefragten Brillengläser zu fertigen. Hierfür bietet sich beispielsweise folgende Staffelung der Rohlingtypen an, bei der die konvexe Vorderseite/Aufnahmeseite folgende Radien R_{cx} aufweist:
Rohlingtyp 1: R_{cx} = 1.000,0 mm
Rohlingtyp 2: R_{cx} = 250,0 mm
Rohlingtyp 3: R_{cx} = 125,0 mm
Rohlingtyp 4: R_{cx} = 83,0 mm
Rohlingtyp 5: R_{cx} = 71,0 mm
Rohlingtyp 6: R_{cx} = 62,5 mm

Hiermit können mit der Vorrichtung folgende Spektren gefertigt werden:
+8 dpt. bis -8 dpt. sphärisch
-4 zyl. torisch
Addition 0,75 bis 3,75 dpt.

Die Staffelung kann jedoch bei Bedarf modifiziert werden. Außerdem müssen die Oberflächenkrümmungen nicht zwingend einen Radius aufweisen. Auch andere optisch wirksame Oberflächenkrümmungen können verwandt werden. So beispielsweise Rohlingtypen deren Aufnahmeseite durch tangential aneinandergrenzende Ringe unterschiedlicher Radien ausgebildet ist, wobei die Radien mit zunehmendem Abstand von der Mitte nach Außen kleiner werden. Denkbar sind auch Freiformflächen auf der Aufnahmeseite.

Entsprechend der Oberflächenkrümmungen der zu verwendenden Rohlingtypen, müssten die Oberflächenkrümmungen der Werkstückaufnahmeflächen ausgebildet sein. Gemäß einer Weiterbildung der Erfindung ist daher vorgesehen, dass die Oberflächenkrümmungen der Werkstückaufnahmeflächen gestaffelt sind. Dies dient der Aufnahme verschiedener Rohlingtypen mit unterschiedlichen Oberflächenkrümmungen und damit der Herstellung eines großen Brillenglasspektrums.

Ferner sollten die Werkstückaufnahmen jeweils den gleichen Außendurchmesser aufweisen. Durch die Einheitlichkeit vereinfacht sich insbesondere die Programmierung von CNCgesteuerten Bewegungen, so zum Beispiel die des Werkstückrevolvers oder die von Werkzeugen. Auch die Durchmesser der Rohlingtypen sollten gleich sein. Dies vereinfacht die Randbearbeitung. Alternativ lassen sich die Brillenglasrohlinge jedoch auch durch einen Bearbeitungsschritt nach Aufnahme in die Werkstückaufnahme auf eines standardisierten Durchmesser bringen. Weiterhin sollte der Durchmesser des Brillenglasrohlings spätestens nach dem Laden in die Werkstückaufnahme und vor der Bearbeitung der Bearbeitungsseite, d.h. der optischen Oberfläche, nur unwesentlich größer sein als derjenige der Werkstückaufnahmen, insbesondere sollte er nicht mehr als 4 mm Überstand aufweisen. Auf diese Weise wird der Brillenglasrohling stets aus Richtung der Aufnahmeseite gestützt.

Um eine Bearbeitung nach der Aufnahme eines Brillenglasrohlings möglichst einfach und damit kostengünstig sowie mit hoher Qualität zu ermöglichen, ist eine Fortbildung der Erfindung angedacht, bei welcher der Abstand der Werkstückaufnahmen zur Hauptdrehachse gleich ist. Um die Hauptachse angeordnete Werkzeuge haben so minimale Stellwege, wodurch diese mit besonders wenig Spiel und geringen Vibrationen lagerbar sind.

Zur Durchführung bestimmter Bearbeitungsschritte ist eine erfindungsgemäße Weiterbildung zu bevorzugen, bei welcher jede Werkstückaufnahme separat rotatorisch um ihre Spindelachse angetrieben ist. Somit müssen nicht alle Fertigungsbewegungen durch etwaige Werkzeuge durchgeführt werden, vielmehr reichen auch Zustellbewegungen, z.B. von einem Drehmeißel. Zudem stabilisiert sich die Lage des aufgenommenen Brillenglasrohlings durch die Rotation, was zu einer hohen Oberflächenqualität bei der Bearbeitung führt.

Eine besonders hohe Produktionsleistung ist mit einer Ausgestaltung zu erzielen, bei welcher die Werkstückaufnahmen radial zur Hauptdrehachse des Werkstückrevolvers gleichmäßig verteilt angeordnet sind. Dies erlaubt ein getaktetes Verdrehen des Werkstückrevolvers, wobei die Werkstückaufnahmen im Wechsel verschiedenen Arbeitsstationen zuführbar sind.

Hierbei sollten die Spindelachsen der Werkstückaufnahmen jeweils im gleichen Winkel zur Hauptdrehachse des Werkstückrevolvers angeordnet sein. Entsprechend steht ein Brillenglasrohling stets im gleichen Winkel zu vorgesehenen Arbeitsstationen. So können die Spindelachsen beispielsweise auf einem imaginären Kegel liegen, dessen Mittelachse die Hauptdrehachse des Werkstückrevolvers ist.

Bei Versuchen wurden besonders gute Ergebnisse erzielt, wenn die Spindelachsen der Werkstückaufnahmen die Hauptdrehachse des Werkstückrevolvers senkrecht schneiden. Außerdem sollten alle Spindelachsen in einer Ebene senkrecht zur Hauptachse liegen. Hierdurch ist die Komplexität des Werkstückrevolvers gering und eine hohe Steifigkeit ist erzielbar, sodass die bearbeiteten Oberflächengeometrien besonders präzise und mit hoher Güte herstellbar sind.

In einer anderen dynamisch vorteilhaften Variante sind die Spindelachsen der Werkstückaufnahmen parallel zur Hauptdrehachse des Werkstückrevolvers ausgerichtet.

Einen großen Mehrwert schafft eine Ausbildung der Vorrichtung, bei welcher jede Werkstückaufnahme eine Ansaugvorrichtung aufweist. Die Sogwirkung haltert einen Brillenglasrohling sicher in der Werkstückaufnahme. Dabei sind die Fixierung und Ablösung des Brillenglasrohlings sehr schnell, rückstandslos und beschädigungsfrei durchführbar. Eine Nachbearbeitung der fixierten Oberfläche, z.B. ein Reinigen, ist nicht erforderlich.

Zur Erhöhung der Produktivität bietet es sich an jede Ansaugvorrichtungen separat pneumatisch zu schalten. Somit kann gleichzeitig an mehreren Werkstückaufnahmen jeweils ein Brillenglasrohling fixiert werden. Als besonders vorteilhaft erweist sich eine spezielle Weiterführung, bei welcher jede Ansaugvorrichtung in die Werkstückaufnahmefläche eingebrachte Sicken aufweist, die pneumatisch mit einer Ansaugleitung verbunden sind. Somit kann die Ansaugfläche innerhalb der Werkstückaufnahmefläche verteilt werden und ein Brillenglasrohling wird gleichmäßig belastet sowie besonders fest gehaltert.

Eine wichtige Ergänzung der Erfindung sieht vor, dass radial zur Hauptdrehachse Arbeitsbereiche angeordnet sind, die jeweils ein Schnittvolumen mit dem Rotationsraum des Werkstückrevolvers aufweisen. In den verschiedenen Arbeitsbereichen lassen sich nun unterschiedliche Werkzeuge und Vorrichtungen anordnen, um Brillenglasrohlinge zu bearbeiten.

Auch die Arbeitsbereiche sollten hierbei radial zur Hauptdrehachse des Werkstückrevolvers gleichmäßig verteilt angeordnet sein. Hierdurch können unterschiedliche Werkstückaufnahmen gleichzeitig mit unterschiedlichen Arbeitsräumen korrespondieren. Somit ist ein gleichzeitiges und besonders schnelles Bearbeiten von mehreren Brillenglasrohlingen möglich.

Eine erfindungsgemäße Ausgestaltung sieht hierbei vor, dass in einem ersten Arbeitsbereich ein Fräswerkzeug mit einem um eine Frässpindel drehbaren und zustellbaren Kugelfräser angeordnet ist. Ein solcher Kugelfräser eignet sich insbesondere für eine schnelle Grobbearbeitung eines Brillenglasrohlings. Hierzu kann das Fräswerkzeug beispielhaft ein Außenumfangsprogramm zur Bearbeitung der äußeren radialen Kontur des Brillenglasrohlings aufweisen. Zusätzlich kann ein Oberflächenbearbeitungsprogramm für die optische Oberfläche eine erhebliche Zeiteinsparung bewirken. Schließlich kann das Fräswerkzeug ein Orientierungsnutprogramm umfassen, um den Brillenglasrohling für spätere Arbeitsschritte mit einer Ausrichtungsmarkierung zu versehen.

Geeignet für derartige Bearbeitungsschritte sind vor allem Kugelfräser, deren Durchmesser senkrecht zur Frässpindel gleich groß oder ähnlich groß ist, wie dessen Erstreckung in Richtung der Frässpindel. Insbesondere Kugelfräser mit einem Durchmesser von 20 mm bis 60 mm sind zweckmäßig.

Sofern Anforderungen bestehen, die nicht allein durch den genannten Kugelfräser erfüllt werden können, ist eine Ergänzung derart dienlich, dass das Fräswerkzeug einen Werkzeugrevolver mit wenigstens einem weiteren vom ersten Kugelfräser abweichenden zweiten Fräser umfasst. Somit kann je nach Anforderung ein geeigneter Fräser ausgewählt werden. Ein manueller Werkzeugwechsel ist nicht notwendig.

Ferner umfasst eine Fortbildung der Erfindung die Anordnung eines Drehwerkzeugs mit zustellbarem Drehmeißel in einem zweiten Arbeitsbereich. Mittels eines Drehwerkzeugs lassen sich besonders feine Strukturen der zu bearbeitenden optischen Oberfläche herstellen. Hierfür sollte das Drehwerkzeug ein Oberflächenprogramm aufweisen. Die notwendige Drehbewegung des Brillenglasrohlings kann durch Rotation der Werkstückaufnahme um dessen Spindelachse erfolgen. Da die optischen Oberflächen der Bearbeitungsseite in den meisten Fällen nicht rotationssymmetrisch sein sollen, weist das Drehwerkzeug vorzugsweise einen FASTtoolServo-Antrieb auf. Dies ist ein besonders schneller und präziser Aktuator. Ein solcher kann beispielsweise mit Piezo-Elementen angetrieben sein. Alternativ bieten sich Linearmotoren und Tauchspulenaktuatoren (Voice-Coil-Aktuatoren) an.

Sofern nicht alle Anforderungen von einem einzigen Drehmeißel erfüllt werden können, kann das Drehwerkzeug mit wenigstens einem vom ersten Drehmeißel abweichenden zweiten Drehmeißel ausgerüstet sein.

Das Drehwerkzeug sollte ferner so gelagert sein, dass es die Winkellage während des Oberflächenprogramms relativ zur Spindelachse der korrespondierenden Werkstückaufnahme gesteuert verändern kann. Somit können Mikrorillen in der Oberfläche vermieden/verringert werden.

Die Belastung auf den Werkstückrevolver und damit etwaige Vibrationen werden am besten vermieden, wenn das Drehwerkzeug und das Fräswerkzeug gegenüberliegend relativ zur Hauptdrehachse des Werkstückrevolvers angeordnet sind. Sofern sie hierbei geodätisch horizontal gegenüberliegend angeordnet sind, wird zudem eine gegenseitige Beeinträchtigung durch Kühlmittel und Späne vermieden.

Ein besonders hoher Automatisierungsgrad mit geringer Fehleranfälligkeit ist erfindungsgemäß dann erzielbar, wenn in einem dritten Arbeitsbereich eine Ladevorrichtung zum Laden von Brillenglasrohlingen in die Werkstückaufnahmen angeordnet ist. Die Ladevorrichtung kann dabei eine Beladefunktion und eine Entladefunktion aufweisen. Alternativ besteht die Option, in einem vierten Arbeitsbereich eine separate Entladevorrichtung zum Entladen von in den Werkstückaufnahmen gehalterten und bearbeiteten Brillenglasrohlingen anzuordnen.

Dabei sollte die Ladevorrichtung ein Magazin für unterschiedliche Rohlingtypen aufweisen. Aus diesem Magazin kann die Ladevorrichtung die entsprechenden Brillenglasrohlinge entnehmen. Dabei können die Brillenglasrohlinge vorzugsweise ohne die Vorrichtung stoppen zu müssen, in das Magazin eingebracht werden. Außerdem arbeitet die Vorrichtung vorzugsweise Aufträge in veränderter Reihenfolge ab, wenn ein Rohlingtyp nicht mehr im Magazin verfügbar ist. Hierfür ist ein Erkennungssensor (z.B. optisch oder mechanisch) am Magazin anordenbar.

Weiterhin betrifft die Erfindung ein Verfahren zur Bearbeitung von Brillenglasrohlingen mittels einer Vorrichtung zur Bearbeitung von Brillenglasrohlingen, mit einem um eine Hauptdrehachse drehbar gelagerten Werkstückrevolver mit wenigstens zwei außerhalb der Hauptdrehachse angeordneten sowie um Spindelachsen drehbar am Werkstückrevolver gelagerten Werkstückaufnahmen, wobei jede Werkstückaufnahme eine Werkstückaufnahmefläche mit einer um die Spindelachse rotationssymmetrischen Oberflächenkrümmung aufweist, wobei sich die Oberflächenkrümmungen der Werkstückaufnahmeflächen unterscheiden, wobei wenigstens zwei Rohlingtypen mit unterschiedlichen aufnahmeseitigen Oberflächenkrümmungen auswählbar sind, umfassend die folgenden Schritte:
I. Auswählen eines Rohlingtyps,
II. Auswählen einer Werkstückaufnahme mit einer Werkstückaufnahmefläche, deren Oberflächenkrümmung der Oberflächenkrümmung der Aufnahmeseite des ausgewählten Rohlingtyps entspricht,
III. Positionieren der ausgewählten Werkstückaufnahme durch Drehen des die Werkstückaufnahmen halternden Werkstückrevolvers um dessen Hauptdrehachse,
IV. Laden eines Brillenglasrohlings des ausgewählten Rohlingtyps in die ausgewählte und positionierte Werkstückaufnahme,
V. Positionieren des geladenen Brillenglasrohlings für eine sich anschließende Bearbeitung (VI.1, VI.2, VI.3, VI.4, VI.5, VI.6) durch Drehen des Werkstückrevolvers um dessen Hauptdrehachse.

Mit einem solchen Verfahren und Werkstückrevolver ist es nunmehr möglich Brillenglasrohlinge mit unterschiedlichen Oberflächenkrümmungen aufzunehmen. Ein aufgenommener Brillenglasrohling wird so während einer anschließenden Bearbeitung stets aus Richtung der nicht zu bearbeitenden Aufnahmeseite gestützt. Entsprechend präzise kann die zu bearbeitende Oberflächengeometrie gefertigt werden.

Weiterhin erfolgt die Werkstückaufnahme unmittelbar in der Vorrichtung und nicht wie beim Aufblocken durch vorgelagerte und teilweise manuelle Arbeitsschritte. Entsprechend ist die Bearbeitungsgeschwindigkeit hoch. Die Werkstückaufnahmen sind auch stets am Werkstückrevolver und müssen nicht gesucht oder gewechselt werden. Zusätzlich fallen keine Abfälle wie beim Aufblocken an.

Dabei können verfahrensgemäß Brillenglasrohlinge aus Glas oder Kunststoff eingesetzt werden. Diese sollten kreisförmig sein, um Schwingungen durch Unwuchten zu vermeiden. Außerdem sind Brillenglasrohlinge mit rotationssymmetrischer Aufnahmeseite und rotationssymmetrischer Bearbeitungsseite für das Verfahren besonders geeignet. Zur Vermeidung von Arbeitsschritten, sollte die Aufnahmeseite des Brillenglasrohlings bereits optisch wirksam sein.

Idealer Weise entspricht die Anzahl der Werkstückaufnahmen der Anzahl der Rohlingtypen. Dadurch kann ein besonders breites Spektrum an Brillengläsern mit dem Verfahren und unter Einsatz der beschriebenen Vorrichtung gefertigt werden. Als praxistauglich erweist sich das Vorhalten von 4 bis 8 Rohlingtypen mit gestaffelten Oberflächenkrümmungen auf der Aufnahmeseite, und besonders bevorzugt von 6 Rohlingtypen mit gestaffelten Oberflächenkrümmungen auf der Aufnahmeseite. Dem entsprechen sollte dann auch die Anzahl der Werkstückaufnahmen. Ein leicht fertigbarer und anschließend einfach berechenbarer Rohlingtyp umfasst eine konvexe Oberflächenkrümmung mit einem konstanten Radius auf der Aufnahmeseite. Rohlingtypen mit besonders vorteilhaften optischen Eigenschaften haben eine konvexe Oberflächenkrümmung auf der Halteseite, ausgebildet durch tangential aneinandergrenzende Ringe unterschiedlicher Radien, wobei die Radien mit zunehmendem Abstand von der Mitte nach Außen kleiner werden.

Grundsätzlich sollte die Auswahl des Rohlingtyps anhand eines Rezeptes erfolgen. Unter einem Rezept ist neben der Dokumentation durch einen Arzt oder Optiker jegliche Information über einen Sehfehler anzusehen. Der Sehfehler kann dabei auch ein standardisierter Sehfehler für eine (Klein-)Serienproduktion sein. Unter Umständen ist jedoch auch die Fassung eines gewünschten Brillengestells ausschlaggebend bei der Auswahl des Rohlingtyps.

Zur Beschleunigung der Produktion ermöglicht es erfindungsgemäßes Verfahren und die Vorrichtung, dass jeder Rohlingtyp Untertypen mit unterschiedlichen Oberflächenkrümmungen auf der Bearbeitungsseite umfasst. Jeder Rohlingtyp ist erfindungsgemäß durch die Aufnahmeseite definiert. Dahingegen unterscheiden sich die Untertypen zusätzlich hinsichtlich der Bearbeitungsseite. Aufgrund höherer Lager-, Verwaltungs- und Bestückungskosten bei der Vorhaltung verschiedener Untertypen pro Rohlingtyp, ist eine solche Vorhaltung meist nur bei der Fertigung von bestimmten standardisierten (Klein-)Serien sinnvoll.

In einem die Erfindung fortführenden Schritt ist ein Einbringen des geladenen Brillenglasrohlings in einen ersten Arbeitsbereich eines Fräswerkzeugs, mit einem um eine Frässpindel drehbaren und zustellbaren Kugelfräser, durch Drehen des Werkstückrevolvers um dessen Hauptdrehachse vorgesehen. Ein solcher Kugelfräser eignet sich insbesondere für eine schnelle Grobbearbeitung des Brillenglasrohlings. Sofern Anforderungen bestehen, die nicht allein durch den genannten Kugelfräser erfüllt werden können, ist eine Ergänzung derart dienlich, dass das Fräswerkzeug einen Werkzeugrevolver mit wenigstens einem weiteren vom ersten Kugelfräser abweichenden zweiten Fräser umfasst. Verfahrensgemäß ist dann eine Auswahl des Fräsers vorzunehmen, um anschließend den Werkzeugrevolver derart zu positionieren, dass das ausgewählte Werkzeug in Eingriff mit dem Brillenglasrohling gebracht werden kann. Somit kann je nach Anforderung ein geeigneter Fräser ausgewählt werden. Ein manueller Werkzeugwechsel ist nicht notwendig.

Mit dem Fräswerkzeug kann das Verfahren um die Durchführung eines Außenumfangsprogramms mit dem Fräswerkzeug ergänzt werden, wobei der Durchmesser des ausgewählten Brillenglasrohlings auf ein Standardmaß gebracht wird. Mit dem Standardmaß kann der Brillenglasrohling später in standardisierten weiteren Werkstückaufnahmen gehaltert werden. Diese sind entsprechend wiederverwendbar und kostengünstig.

Bei der Durchführung des Außenumfangsprogramms des Fräswerkzeugs sollte wenigstens zeitweise ein Rotieren der Werkstückaufnahme und des Brillenglasrohlings um die Spindelachse erfolgen. Somit werden Unwuchten abgetragen und der Brillenglasrohling sitzt anschließend exakt mittig auf der Werkstückaufnahme. Außerdem sind die Stellwege des Fräswerkzeugs klein und damit weniger anfällig für Spiel und Vibrationen.

Das Standardmaß für den Durchmesser des Brillenglasrohlings ist im Außenumfangsprogramm vorzugsweise höchstens 8 mm größer als der Durchmesser der Werkstückaufnahme. Damit wird nahezu der gesamte Brillenglasrohling aufnahmeseitig gestützt. Trotzdem ist der Umfang des Brillenglasrohlings zugänglich für die Bearbeitung, z.B. für die Anbringung von Strichcodierungen und/oder Ausrichtungsmarkierungen. Als absolute Werte eignen sich insbesondere Durchmesser zwischen 70 mm und 80 mm.

Eine Weiterentwicklung des Verfahrens betrifft einen Schritt, bei dem ein Durchführen eines Oberflächenbearbeitungsprogramms mit dem Fräswerkzeug erfolgt, wobei die von der Werkstückaufnahme wegzeigende Bearbeitungsseite des Brillenglasrohlings bearbeitet wird. Diese Bearbeitung mit dem Fräser ist besonders schnell. Um anschließende Feinbearbeitungen zu ermöglichen, sollte im Oberflächenbearbeitungsprogramm des Fräswerkzeugs ein Aufmaß von 0,15 mm bis 0,25 mm relativ zur späteren optisch wirksamen Oberfläche belassen werden. Zur Erhöhung der Bearbeitungsgeschwindigkeit bietet sich ein wenigstens zeitweises Rotieren der Werkstückaufnahme und des Brillenglasrohlings um die Spindelachse bei Durchführung des Oberflächenbearbeitungsprogramms des Fräswerkzeugs an.

Ferner besteht die erfindungsgemäße Option eines Durchführens eines Orientierungsnutprogramms mit dem Fräswerkzeug, bei dem eine Orientierungsnut in den radialen Umfang des Brillenglasrohlings gefräst wird. Bei späteren Bearbeitungsschritten ist hierdurch eine schnelle Ausrichtung des Brillenglasrohlings möglich. Vorzugsweise wird die Orientierungsnut dabei zwischen 1 mm und 2 mm, und besonders bevorzugt 1,4 mm bis 1,6 mm, tief in den Umfang des Brillenglasrohlings gefräst. Die Orientierungsnut kann so radial außerhalb der Werkstückaufnahme liegen, wodurch diese nicht beschädigt wird. Zudem ist sie hinreichend groß für eine Ausrichtung und gleichzeitig beschränkt sie den Platz für die Oberflächenbearbeitung nicht sonderlich.

Eine besonders hohe Oberflächenqualität kann verfahrensgemäß dann erzielt werden, wenn sich ein Einbringen des Brillenglasrohlings in einen zweiten Arbeitsbereich eines Drehwerkzeugs mit zustellbarem Drehmeißel durch Drehen des Werkstückrevolvers um dessen Hauptdrehachse anschließt. Drehwerkzeuge greifen kontinuierlich in das Werkstück ein. Eine Fräserschneide fährt hingegen abwechselnd in- und aus dem Material hinaus. Weiterhin ist mit Drehwerkzeugen eine endlose Spanabhebung durchführbar, wodurch weniger Oberflächenschäden durch Vibration des Spans entstehen. Damit ist durch Drehen eine präzise Oberfläche fertigbar.

Eine spezielle Variante des Verfahrens sieht daher ein Durchführen eines Oberflächenprogramms mit dem Drehwerkzeug vor, bei dem der Drehmeißel zugestellt sowie der Brillenglasrohling mit der Werkstückaufnahme um die Spindelachse rotiert werden. Idealerweise wird hierbei ein Endlosspan erzeugt, was bei einer Vorbearbeitung mit einem Fräser und damit verbunden einem für das Drehen verbliebenen Aufmaß zu berücksichtigen ist. Bevorzugt wird der Drehmeißel dabei von außen hin zur Spindelachse bewegt.

Je nachdem wie groß der notwendige Materialabtrag auf der Bearbeitungsseite ist, kann erfindungsgemäß ein Herstellen der Oberflächengeometrie zunächst durch Fräsen und anschließend im Feinbereich durch Drehen erfolgen. Alternativ kann auch nur eine Fräsbearbeitung oder nur eine Drehbearbeitung stattfinden, letzteres insbesondere wenn nur ein geringer Materialabtrag zu erfolgen hat. Ist der notwendige Materialabtrag hingegen groß, bietet sich ein Belassen eines Materialaufmaßes von 0,15 mm bis 0,25 mm im Oberflächenbearbeitungsprogramm des Fräswerkzeugs relativ zum Oberflächenbearbeitungsprogramm des Drehwerkzeugs an.

An die Oberflächenprogramme können sich verfahrensgemäß weitere Arbeitsschritte anschließen. Dies betrifft insbesondere eine Bearbeitung der Bearbeitungsseite in einem Feinschleif- und/oder einem Polierprogramm. Hierfür kann das Verfahren um eine Anordnung eines zustellbares Feinschleifwerkzeug in einem fünften Arbeitsbereich ergänzt sein. Mit diesem ist ein Durchführen eines Feinschleifprogramms möglich, bei dem das Feinschleifwerkzeug zugestellt sowie optional der Brillenglasrohling mit der Werkstückaufnahme um deren Spindelachse rotiert werden.

In einer weiteren oder zusätzlichen möglichen Ausgestaltung ist das Verfahren, bzw. die Vorrichtung um eine Anordnung eines zustellbaren Polierwerkzeugs in einem sechsten Arbeitsbereich ergänzt. Verfahrensgemäß kann ein Durchführen eines Polierprogramms erfolgen, bei dem das Polierwerkzeug zugestellt sowie optional der Brillenglasrohling mit der Werkstückaufnahme um deren Spindelachse rotiert werden.

Ferner sieht eine Konkretisierung des Verfahrens vor, dass ein Berechnen der Oberflächengeometrie der Bearbeitungsseite des Brillenglasrohlings nach Auswahl des Rohlingtyps und vor der Bearbeitung des Brillenglasrohlings, insbesondere auf Basis eines Rezepts erfolgt. Durch die Auswahl des Rohlingtyps und des Rezepts erfolgt so eine optimale Gestaltung der herzustellenden optischen Linse, dem Brillenglas. Die Kenntnis der exakten Geometrie des Brillenglasrohlings ist ausschließlich im Verfahren notwendig. Fehlerquellen und Datenbankinkompatibilitäten, z.B. bei Modifikationen am Brillenglasrohling und nicht angepassten Datenständen in unterschiedlichen Speicherorten, werden hierdurch vermieden. Resultat der Berechnung können sphärische oder α-sphärische bzw. torische oder a-torische Oberflächengeometrien der Bearbeitungsseite sein, in der auch bifokale Gleitsichtflächen vorhanden sein können. Es ist verfahrensgemäß möglich, die Bearbeitungsseite als Freiformfläche mit beliebiger Geometrie zu berechnen und später zu erzeugen.

In einer bevorzugten Ausführungsform des Verfahrens ist ein Berechnen der Oberflächengeometrie der Bearbeitungsseite des Brillenglasrohlings mit einem zentralen Rezeptlinsenbereich und einen umgebenden sowie sich tangential anschließenden Halterandbereich vorgesehen. Zwischen dem Rezeptlinsenbereich und dem Halterandbereich kann man sich eine virtuelle Brillenfassungslinie vorstellen. Die Geometrie des innenliegenden Rezeptlinsenbereichs ist einzig der Herstellung des Brillenglases geschuldet. Der Halterandbereich dient der Optimierung weiterer Arbeitsschritte. Dieser ist jedoch so auszubilden, dass Bearbeitungsschritte im Rezeptlinsenbereich präzise ausgeführt werden können. Durch das tangentiale aneinandergrenzen des Rezeptlinsenbereichs und des Halterandbereichs, ist ein gleitender Übergang zwischen Rezeptlinsenbereich und Halterandbereich gegeben. D.h. die mathematische Ableitung ist beidseitig zur virtuellen Brillenfassungslinie gleich oder anders formuliert, besteht kein Knick in der Oberfläche. Somit kann ein Werkzeug bei einem Feinstschleifen und/oder Polieren des Rezeptlinsenbereiches über die virtuelle Brillenfassungslinie hinaus bewegt werden, ohne dass Kantenpressung entsteht. Ein Einebnen von Feinstrukturen der Oberflächengeometrie findet daher nicht statt.

Dabei sollte der Halterandbereich eine konstante Dicke am Außenumfang aufweisen, und insbesondere die Höhe des Brillenglasrohlings am äußeren Umfang ganz oder zum größten Teil erhalten bleiben. Das Werkstück kann damit bei allen weiteren Transport- und Bearbeitungsschritten mit standardisierten Werkzeugen gehalten werden, die auf den Standardmaß-Durchmesser und die Halteranddicke abgestimmt sind. Hieraus ergibt sich eine erhebliche Ersparnis bei den Werkzeug- und deren Lagerkosten sowie eine schnelle Bearbeitung.

Da der Halterand infolge seiner größeren Dicke stabil ist, stützt er den dünnen Rand des Rezeptlinsenbereichs entlang der virtuellen Brillenfassungslinie in idealer Weise ab. Eine Verformung des Brillenglasrohlings unter dem Druck der Bearbeitungswerkzeuge findet daher nicht statt, wodurch die Qualität der zu fertigenden Oberflächengeometrie der Bearbeitungsseite des Brillenglasrohlings hoch ist.

Ein besonders einfaches und schnelles Laden von Brillenglasrohlingen in die Werkstückaufnahmen ist erzielbar, wenn ein Rotieren des Werkstückrevolvers in einen dritten Arbeitsbereich mit einer Ladevorrichtung zum Laden des ausgewählten Brillenglasrohlings in die ausgewählte Werkstückaufnahme erfolgt, einhergehend mit einem Erzeugen eines Unterdrucks zwischen der Werkstückaufnahmefläche der ausgewählten Werkstückaufnahme und dem zu ladenden Brillenglasrohling. Die Ladevorrichtung kann dabei eine Beladung und eine Entladung durchführen. Alternativ besteht die Option, in einem vierten Arbeitsbereich eine separate Entladevorrichtung zum Entladen von in den Werkstückaufnahmen gehalterten und bearbeiteten Brillenglasrohlingen anzuordnen.

Die Ladevorrichtung sollte ein Magazin für unterschiedliche Rohlingtypen aufweisen. Aus diesem Magazin entnimmt die Ladevorrichtung dann die entsprechenden Brillenglasrohlinge. Vorzugsweise können die Brillenglastypen separat und ohne die Vorrichtung stoppen zu müssen in das Magazin eingebracht/nachgefüllt werden, z.B. auf eine Rohlingrutsche des Magazins. Außerdem arbeitet die Vorrichtung vorzugsweise Aufträge in veränderter Reihenfolge ab, wenn ein Rohlingtyp nicht mehr verfügbar ist. Hierfür ist ein Erkennungssensor (z.B. optisch oder mechanisch) am Magazin anordenbar.

Ein weiteres optional in einem Arbeitsbereich anordenbares Werkzeug ist ein Gravierwerkzeug. Mittels Laser oder Fräser kann hiermit eine Orientierungskennzeichnung im Randbereich des Brillenglasrohlings angebracht werden. Zusätzlich kann ein solches Werkzeug Informationen über die optischen Eigenschaften des Brillenglases am Brillenglas/Brillenglasrohling eingravieren, z.B. durch einen Strichcode, der bevorzugt am Außenumfang positioniert ist.

Eine spätere Herauslösung des Brillenglasbereichs aus dem Halterandbereich sollte auf einer abweichenden Vorrichtung durchgeführt werden. Die Herauslösung kann entweder im Werk des Verfahrens oder auch beim Brillenoptiker erfolgen. In Frage kommen hierfür z.B. mechanisch angetriebene Werkzeuge (z.B. Fingerfräser) oder im Werk des Verfahrens auch ein Waterjet-Verfahren. Wenn das Abtrennen des Brillenglases vom Halterand beim Hersteller erfolgt, so kann entweder die genaue, virtuelle Umrisslinie der Brillenfassung im Werk des Verfahrens erzeugt werden, oder es wird ein Umriss erzeugt, der 1 mm bis 2 mm größer ist als die virtuelle Umrisslinie, damit der Brillenoptiker an dem Brillenglas eine Bearbeitungszugabe hat.

Ferner betrifft die Erfindung die Verwendung einer Vorrichtung, mit einem um eine Hauptdrehachse drehbar gelagerten Werkstückrevolver mit wenigstens zwei außerhalb der Hauptdrehachse angeordneten sowie um Spindelachsen drehbar am Werkstückrevolver gelagerten Werkstückaufnahmen, wobei jede Werkstückaufnahme eine Werkstückaufnahmefläche mit einer um die Spindelachse rotationssymmetrischen Oberflächenkrümmung aufweist, und wobei sich die Oberflächenkrümmungen der Werkstückaufnahmeflächen unterscheiden, zur Bearbeitung von Brillenglasrohlingen.

Durch die Verwendung der Vorrichtung ist eine schnelle und kostengünstige Fertigung von Brillengläsern möglich, deren optische Oberflächen eine hohe Qualität aufweisen. Außerdem sind Lager- und Vorhaltungskosten für Werkzeuge, Haltevorrichtungen und Material gering. Nähere Ausführungen umfassen weiterhin die Verwendung von dieser Vorrichtung ergänzt mit einem oder mehreren der oben beschriebenen technischen Merkmale. Die weiteren Vorteile der Verwendung der Vorrichtung entsprechen denen der zuvor beschriebenen Vorteile der Vorrichtung und des Verfahrens.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: eine schematisch dargestellte Vorrichtung zur Bearbeitung von Brillenglasrohlingen;
- Fig. 1b: einen Schnitt durch die in Fig. 1 a gezeigte erste Werkstückaufnahme und das Drehwerkzeug;
- Fig. 2: eine schematisch dargestellte Frontansicht einer Werkstückaufnahmefläche einer Werkstückaufnahme mit einer Ansaugvorrichtung;
- Fig. 3: eine schematische dargestellte Seitenansicht einer Werkstückaufnahme mit einem aufgenommenen Brillenglasrohling; und
- Fig. 4: eine weitere schematisch dargestellte Vorrichtung zur Bearbeitung von Brillenglasrohlingen.

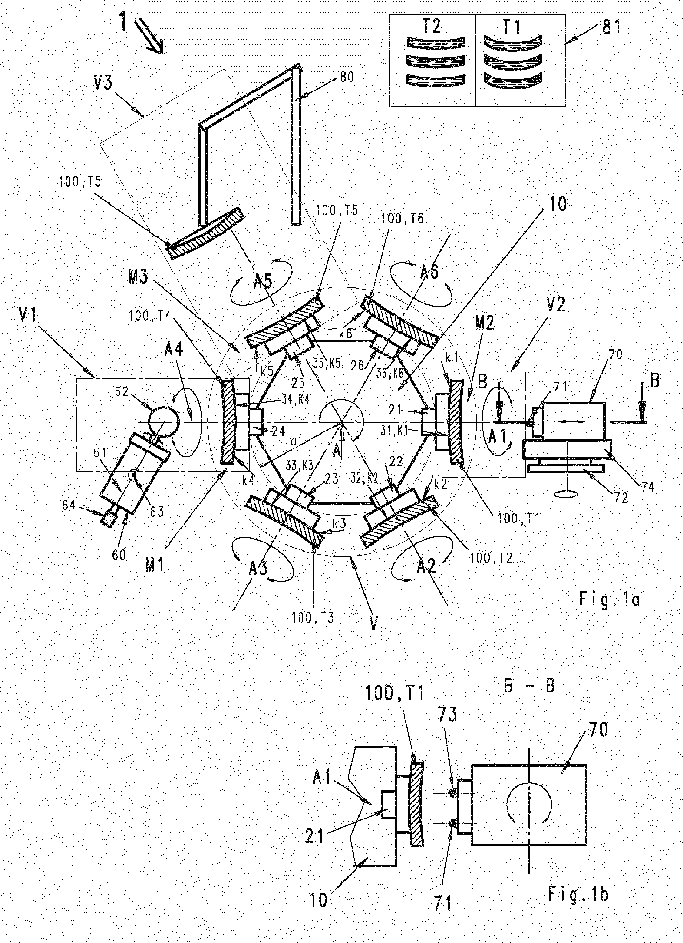

**Fig. 1a** zeigt eine schematisch dargestellte Vorrichtung 1 zur Bearbeitung von Brillenglasrohlingen 100. Ein um eine Hauptdrehachse A drehbar gelagerten Werkstückrevolver 10 weist sechs außerhalb der Hauptdrehachse A angeordnete sowie um Spindelachsen A1, A2, A3, A4, A5, A6 drehbar am Werkstückrevolver 10 gelagerte Werkstückaufnahmen 21, 22, 23, 24, 25, 26 auf. Der Werkstückrevolver 10 ist um 360 Grad drehbar um die Hauptdrehachse A gelagert.

Jede Werkstückaufnahme 21, 22, 23, 24, 25, 26 hat eine Werkstückaufnahmefläche 31, 32, 33, 34, 35, 36 mit einer um die Spindelachse A1, A2, A3, A4, A5, A6 rotationssymmetrischen Oberflächenkrümmung K1, K2, K3, K4, K5, K6. Die Oberflächenkrümmungen K1, K2, K3, K4, K5, K6 der Werkstückaufnahmeflächen 31, 32, 33, 34, 35, 36 unterscheiden sich jedoch voneinander. Insbesondere sind die Werkstückaufnahmeflächen 31, 32, 33, 34, 35, 36 konkav ausgebildet, sowie deren Oberflächenkrümmungen K1, K2, K3, K4, K5, K6 gestaffelt. Wie man erkennt, ist der Abstand a aller Werkstückaufnahmen 21, 22, 23, 24, 25, 26 zur Hauptdrehachse A gleich. Die Außendurchmesser der Werkstückaufnahmen 21, 22, 23, 24, 25, 26 sind jeweils gleich groß. Weiterhin ist jede Werkstückaufnahme 21, 22, 23, 24, 25, 26 separat rotatorisch um ihre Spindelachse A1, A2, A3, A4, A5, A6 angetrieben.

Gut erkennbar ist weiterhin, dass die Werkstückaufnahmen 21, 22, 23, 24, 25, 26 radial zur Hauptdrehachse A des Werkstückrevolvers 10 gleichmäßig verteilt angeordnet sind. Dabei stehen die Spindelachsen A1, A2, A3, A4, A5, A6 jeweils im gleichen Winkel zur Hauptdrehachse A. Insbesondere schneiden die Spindelachsen A1, A2, A3, A4, A5, A6 der Werkstückaufnahmen 21, 22, 23, 24, 25, 26 die Hauptdrehachse A des Werkstückrevolvers 10 senkrecht. Zudem liegen alle Spindelachsen A1, A2, A3, A4, A5, A6 in einer Ebene senkrecht zur Hauptdrehachse A.

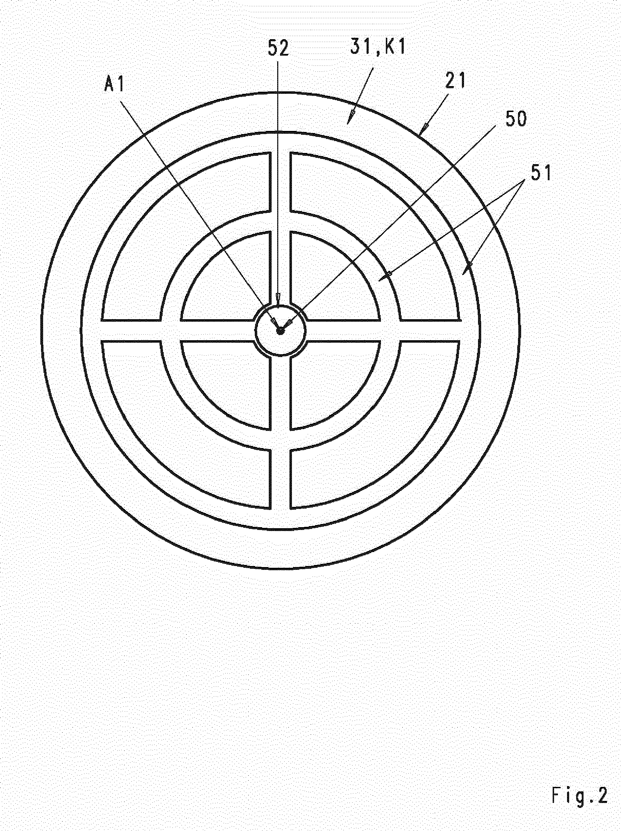

Auf eine detaillierte Darstellung und Kennzeichnung von Ansaugvorrichtungen an den einzelnen Werkstückaufnahmen 21, 22, 23, 24, 25, 26 wurde verzichtet. Diese kann beispielsweise wie in Fig. 2 anhand einer einzigen Werkstückaufnahme 21 gezeigt, ausgebildet sein. Zudem sollten die Ansaugvorrichtungen 50 jeder einzelnen Werkstückaufnahme 21, 22, 23, 24, 25, 26 separat pneumatisch geschaltet werden, sowie in die Werkstückaufnahmefläche 31, 32, 33, 34, 35, 36 eingebrachte Sicken aufweisen, die pneumatisch mit einer Ansaugleitung verbunden sind. Die Ansaugleitung kann ebenso wie eine Stromzufuhr mittig aus dem Werkstückrevolver 10 in einen nicht rotierenden Vorrichtungsteil geführt werden. Nicht dargestellt sind dieser nicht rotierende Vorrichtungsteil, ein Maschinenbett sowie eine Maschinenkapselung, um welche die Vorrichtung jedoch ergänzt sein kann.

Zur Bearbeitung der Brillenglasrohlinge 100 sind radial zur Hauptdrehachse A Arbeitsbereiche V1, V2, V3 angeordnet, die jeweils ein Schnittvolumen M1, M2, M3 mit dem Rotationsraum V des Werkstückrevolvers 10 (inklusive der zu bearbeitenden Brillenglasrohlinge 100) aufweisen. Diese Arbeitsbereiche V1, V2, V3 sind radial zur Hauptdrehachse A verteilt angeordnet. Insbesondere korrespondieren stets alle Arbeitsbereiche V1, V2, V3 mit einer Werkstückaufnahme 21, 22, 23, 24, 25, 26, wenn eine einzige Werkstückaufnahme 21, 22, 23, 24, 25, 26 in einem Arbeitsbereich V1, V2, V3 liegt.

In einem ersten Arbeitsbereich V1 ist dabei ein Fräswerkzeug 60 mit einem um eine Frässpindel 61 drehbaren und zustellbaren Kugelfräser 62 angeordnet. Der Durchmesser des Kugelfräsers 62 senkrecht zur Frässpindel 61 ist genauso groß wie dessen Erstreckung in Richtung der Frässpindel 61. Anhand des Größenverhältnisses zu den Brillenglasrohlingen 100, die einen Durchmesser von 70 mm bis 80 mm aufweisen, kann auf einen Durchmesser von circa 30 mm des Kugelfräsers 62 geschlossen werden. Außerdem umfasst das Fräswerkzeug 60 einen Werkzeugrevolver 63 mit einem weiteren vom Kugelfräser 62 abweichenden zweiten Fräser 64.

Ein zweiter Arbeitsbereich V2 liegt im Bereich eines Drehwerkzeugs 70 mit zustellbarem Drehmeißel 71. Dieser zweite Arbeitsbereich V2 ist zusätzlich aus einer anderen Perspektive in einem Schnitt B-B in Fig. 1b gezeigt. Das Drehwerkzeug 70 verfügt über einen FASTtoolServo-Antrieb 74, um nicht rotationssymmetrische Oberflächen drehen zu können. Der FASTtoolServo-Antrieb 74 hat hierfür Aktuatoren mit Piezoelementen. Zudem kann die Winkellage des Drehwerkzeugs 70 relativ zur Spindelachse A1, A2, A3, A4, A5, A6 (in der gezeigten Ausrichtung gegenüber der ersten Spindelachse A1) einer gegenüberstehenden Werkstückaufnahme 21, 22, 23, 24, 25, 26 (in der gezeigten Ausrichtung der ersten Werkstückaufnahme 21) gesteuert verändert werden. Das Drehwerkzeug 70 umfasst dabei einen vom ersten Drehmeißel 71 abweichenden zweiten Drehmeißel 73, wie man in Fig. 1b erkennt. Die Drehmeißel 71, 73 sind nebeneinander positioniert und werden gemeinsam mit dem FASTtoolServo-Antrieb 74 bewegt. Dabei haben die beiden Drehmeißel 71, 73 insbesondere Schneiden mit unterschiedlichen Radien. Während des Drehprozesses sollte jedoch nur einer der Drehmeißel 71, 73 mit dem Brillenglasrohling 100 in Eingriff gebracht werden.

Ferner ist zu erkennen, dass das Drehwerkzeug 70 und das Fräswerkzeug 60 gegenüberliegend relativ zur Hauptdrehachse A des Werkstückrevolvers 10 angeordnet sind. Nur anhand der Zeichnungsausrichtung zu erahnen ist, dass die Hauptdrehachse A geodätisch horizontal ausgerichtet ist. Auch Drehwerkzeug 70 und Fräswerkzeug 60 liegen auf der geodätisch gleichen Höhe.

In einem dritten Arbeitsbereich V3 befindet sich eine Ladevorrichtung 80 zum Laden von Brillenglasrohlingen 100 in die Werkstückaufnahmen 21, 22, 23, 24, 25, 26. Sie ist als Roboterarm mit Greifer ausgebildet und übernimmt sowohl eine Beladung als auch eine Entladung. Dabei verfügt sie über ein Magazin 81 für unterschiedliche Rohlingtypen T1, T2, T3, T4, T5, T6.

Die in Fig. 1a gezeigte Vorrichtung 1 ist nunmehr für die Durchführung eines Verfahrens zur Bearbeitung von Brillenglasrohlingen 100 geeignet, wobei wenigstens zwei Rohlingtypen T1, T2, T3, T4, T5, T6 mit unterschiedlichen aufnahmeseitigen Oberflächenkrümmungen k1, k2, k3, k4, k5, k6 auswählbar sind, und das die folgenden Schritte umfasst:
I. Auswählen eines Rohlingtyps T1, T2, T3, T4, T5, T6,
II. Auswählen einer Werkstückaufnahme 21, 22, 23, 24, 25, 26 mit einer Werkstückaufnahmefläche 31, 32, 33, 34, 35, 36, deren Oberflächenkrümmung K1, K2, K3, K4, K5, K6 der Oberflächenkrümmung k1, k2, k3, k4, k5, k6 der Aufnahmeseite 101 des ausgewählten Rohlingtyps T1, T2, T3, T4, T5, T6 entspricht,
III. Positionieren der ausgewählten Werkstückaufnahme 21, 22, 23, 24, 25, 26 durch Drehen des die Werkstückaufnahmen 21, 22, 23, 24, 25, 26 halternden Werkstückrevolvers 10 um dessen Hauptdrehachse A,
IV. Laden eines Brillenglasrohlings 100 des ausgewählten Rohlingtyps T1, T2, T3, T4, T5, T6 in die ausgewählte und positionierte Werkstückaufnahme 21, 22, 23, 24, 25, 26,
V. Positionieren des geladenen Brillenglasrohlings 100 für eine sich anschließende Bearbeitung VI.1, VI.2, VI.3, VI.4, VI.5, VI.6 durch Drehen des Werkstückrevolvers 10 um dessen Hauptdrehachse A.

Das Verfahren eignet sich besonders gut zur Bearbeitung von kreisförmigen Brillenglasrohlingen 100 aus Glas oder Kunststoff mit optisch wirksamer Aufnahmeseite 101. Vorzugsweise haben die Brillenglasrohlinge 100 eine rotationssymmetrische Aufnahmeseite 101 und eine rotationssymmetrische Bearbeitungsseite 102. Dabei entspricht die Anzahl der Werkstückaufnahmen 21, 22, 23, 24, 25, 26 der Anzahl der Rohlingtypen T1, T2, T3, T4, T5, T6. Die Anzahl beträgt in diesem Ausführungsbeispiel sechs. Die sechs Rohlingtypen T1, T2, T3, T4, T5, T6 haben gestaffelte konvexe Oberflächenkrümmungen k1, k2, k3, k4, k5, k6. Der Krümmungsradius des ersten Rohlingtyps T1 ist am kleinsten und steigt bis zu sechsten Rohlingtyp T6 gestaffelt an. Die ersten fünf Rohlingtypen T1, T2, T3, T4, T5 haben eine konvexe Oberflächenkrümmung k1, k2, k3, k4, k5, k6 mit einem konstanten Radius. Dahingegen setzt sich die Aufnahmeseite 101 des sechsten Rohlingtyps T6 aus tangential aneinandergrenzenden Ringen unterschiedlicher Radien zusammen, wobei die Radien mit zunehmendem Abstand von der Mitte nach Außen kleiner werden. Je nach Rezept kann der passende Rohlingtyp T1, T2, T3, T4, T5, T6 ausgewählt werden. Alternativ sind jedoch auch Rohlingtyp T1, T2, T3, T4, T5, T6 mit anderen Oberflächenkrümmungen k1, k2, k3, k4, k5, k6 miteinander kombinierbar.

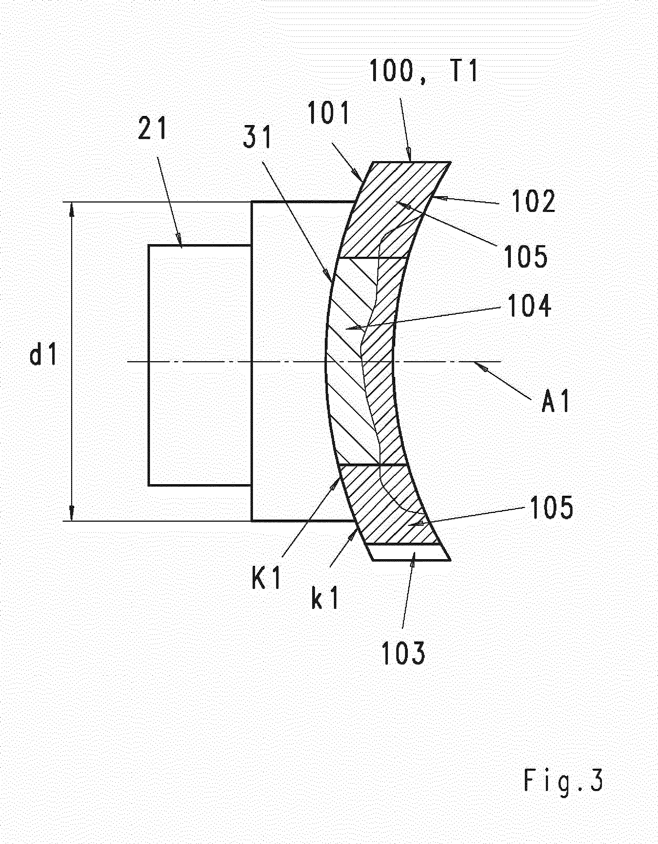

Entsprechend der Darstellung ist ein Brillenglasrohling 100 des Rohlingtyps T4 in der vierten Werkstückaufnahme 24 aufgenommen und durch Drehen des Werkstückrevolvers 10 um dessen Hauptdrehachse A in den ersten Arbeitsbereich V1 eingebracht worden. Hier kann nun eine Durchführung eines Außenumfangsprogramms mit dem Fräswerkzeug 60 erfolgen, wobei der Durchmesser des ausgewählten Brillenglasrohlings 100 auf ein Standardmaß gebracht wird. Zeitweise werden die Werkstückaufnahme 21, 22, 23, 24, 25, 26 und der Brillenglasrohlings 100 dabei um die Spindelachse A1, A2, A3, A4, A5, A6 rotiert. Es schließt sich eine Durchführung eines Oberflächenbearbeitungsprogramms mit dem Fräswerkzeug 60 an, wobei die von der Werkstückaufnahme 21, 22, 23, 24, 25, 26 wegzeigende Bearbeitungsseite 102 des Brillenglasrohlings 100 bearbeitet wird. Auch hierbei wird die Werkstückaufnahme 21, 22, 23, 24, 25, 26 nebst Brillenglasrohling 100 zeitweise um die Spindelachse A1, A2, A3, A4, A5, A6 rotiert. Abschließend wird ein Orientierungsnutprogramm mit dem Fräswerkzeug 60 durchgeführt, bei dem eine Orientierungsnut 103 in den radialen Umfang des Brillenglasrohlings 100 gefräst wird. Die bspw. in Fig. 3 erkennbare Orientierungsnut 103 ist 1,5 mm tief in den Umfang des Brillenglasrohlings 100 gefräst.

Ein bereits mit dem Fräswerkzeug 60 bearbeiteter Brillenglasrohling 100 des ersten Rohlingtyps T1 steht gleichzeitig mit der ihn haltenden ersten Werkstückaufnahme 21 in dem zweiten Arbeitsbereich V2. Hier wird ein Oberflächenprogramm mit dem Drehwerkzeug 70 durchgeführt, bei dem jeweils einer der Drehmeißel 71, 73 zugestellt sowie der Brillenglasrohling 100 mit der Werkstückaufnahme 21, 22, 23, 24, 25, 26 um die Spindelachse A1, A2, A3, A4, A5, A6 rotiert werden. Für das Drehen wurde in einem vorangegangenen Oberflächenbearbeitungsprogramm des Fräswerkzeugs 60 ein Materialaufmaß von 0,15 mm bis 0,25 mm belassen.

Der Brillenglasrohling 100 des fünften Rohlingtyps T5 befindet sich gemäß der Darstellung in dem dritten Arbeitsbereich V3. Hier ist die Ladevorrichtung 80 zum Laden eines ausgewählten Brillenglasrohlings 100 in die ausgewählte Werkstückaufnahme 21, 22, 23, 24, 25, 26 angeordnet. Außerdem übernimmt diese die Entladung der bearbeiteten Brillenglasrohlinge 100.

Auf eine Darstellung einer Berechnungs- und Regeleinheit wurde verzichtet. Mittels einer solchen können die gewünschten Oberflächengeometrien berechnet werden. Anschließend werden die Bewegungen der Ladevorrichtung 80, des Werkstückrevolvers 10, der Rotation der Werkstückaufnahmen 21, 22, 23, 24, 25, 26, des Fräswerkzeugs 60 und des Drehwerkzeugs 70 bestimmt. Außerdem werden diese Komponenten von der Regeleinheit entsprechend der Berechnung geregelt und/oder angesteuert.

Auf diese Weise wird die Bearbeitungsseite (102) entsprechend der Berechnungen zu einer sphärischen oder a-sphärischen bzw. torischen oder a-torischen Oberfläche bearbeitet, in der auch bifokale Gleitsichtflächen vorhanden sein können.

Dabei berücksichtigt die Berechnungs- und Regeleinheit einen zentralen Rezeptlinsenbereich 104 und einen umgebenden sowie sich tangential anschließenden Halterandbereich 105. Der Halterandbereich 105 wird sofern es der Rezeptlinsenbereich zulässt mit einer konstanten Dicke am Außenumfang ausgelegt.

**Fig. 2** zeigt eine schematisch dargestellte Frontansicht einer ersten Werkstückaufnahmefläche 31 einer ersten Werkstückaufnahme 21 mit einer Ansaugvorrichtung 50. Letztere weist in die Werkstückaufnahmefläche 31 eingebrachte Sicken 51 auf. Diese sind pneumatisch mit einer Ansaugleitung 52 verbunden. Wie man erkennt, führt die Ansaugleitung 52 axial in Richtung der ersten Spindelachse A1 durch die erste Werkstückaufnahme 31 hindurch bis in die Werkstückaufnahmefläche 31. Von hier verzweigt sich die Ansaugleitung 52 radial in die Sicken 51. Dabei umfassen die Sicken 51 radial umlaufende Sicken 51 und von der Spindelachse A1 nach außen führende sowie verteilende Sicken 51. Somit kann ein Unterdruck zwischen der Werkstückaufnahmefläche 31 und dem zu ladenden Brillenglasrohling 100 erzeugt werden. Aus der gezeigten Perspektive ist die erste Oberflächenkrümmung K1 der Werkstückaufnahmefläche 31 nur erahnbar. Diese ist jedoch in Fig. 3 erkennbar.

**Fig. 3** beinhaltet eine schematische dargestellte, seitliche Schnittansicht einer ersten Werkstückaufnahme 21 mit einem aufgenommenen Brillenglasrohling 100. Die erste Werkstückaufnahme 21 hat eine erste Spindelachse A1, um welche sie in montiertem Zustand drehbar ist. Weiterhin weist die erste Werkstückaufnahme 21 eine erste Werkstückaufnahmefläche 31 mit einer um die erste Spindelachse A1 rotationssymmetrischen ersten Oberflächenkrümmung K1 auf.

Der aufgenommene Brillenglasrohling 100 ist von einem ersten Rohlingtyp T1, der eine Oberflächenkrümmung k1 auf der Aufnahmeseite 101 hat.

Dabei entspricht die erste Oberflächenkrümmung K1 der Werkstückaufnahmefläche 31 der Werkstückaufnahme 21 derjenigen der ersten Oberflächenkrümmung k1 der Aufnahmeseite 101 des ersten Rohlingtyps T1. Somit ergibt sich eine große Anlagefläche zwischen der Werkstückaufnahmefläche 31 und der Aufnahmeseite 101.

Wie man erkennt, hat die erste Werkstückaufnahmen 21 einen Durchmesser d1, der kleiner ist als der Durchmesser des Brillenglasrohlings 100.

Der aufgenommene Brillenglasrohling 100 kann nunmehr in einem Oberflächenbearbeitungsprogramm auf der von der Werkstückaufnahme 21, 22, 23, 24, 25, 26 wegzeigenden Bearbeitungsseite 102 mit einem Fräs- oder Drehwerkzeug bearbeitet werden. Dabei kann die Berechnung der Oberflächengeometrie der Bearbeitungsseite 102 einen zentralen Rezeptlinsenbereich 104 und einen umgebenden sowie sich tangential anschließenden Halterandbereich 105 berücksichtigen.

Erkennbar ist weiterhin eine in Bildrichtung unten radial in den Umfang des Brillenglasrohlings 100 eingebrachte Orientierungsnut 103.

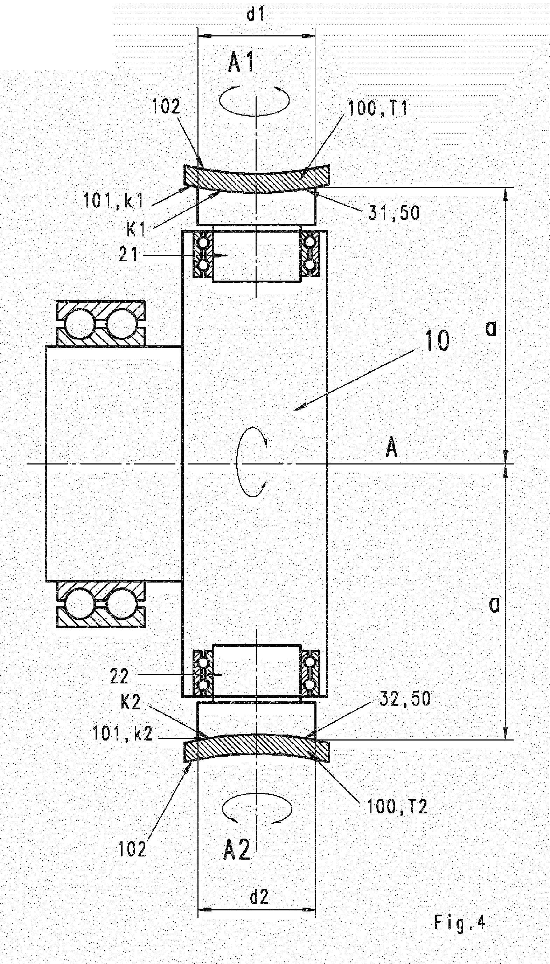

Fig. 4 zeigt eine weitere schematisch dargestellte Vorrichtung 1 zur Bearbeitung von Brillenglasrohlingen 100. Ein um eine Hauptdrehachse A drehbar gelagerter Werkstückrevolver 10 weist wenigstens zwei sichtbare und außerhalb der Hauptdrehachse A angeordnete sowie um Spindelachsen A1, A2 drehbar am Werkstückrevolver 10 gelagerte Werkstückaufnahmen 21, 22 auf. Der Werkstückrevolver 10 ist um 360 Grad drehbar um die Hauptdrehachse A gelagert.

Jede Werkstückaufnahme 21, 22 hat eine Werkstückaufnahmefläche 31, 32 mit einer um die Spindelachse A1, A2 rotationssymmetrischen Oberflächenkrümmung K1, K2. Die Oberflächenkrümmungen K1, K2 der Werkstückaufnahmeflächen 31, 32 unterscheiden sich jedoch voneinander. Insbesondere sind die Werkstückaufnahmeflächen 31, 32 konkav ausgebildet, sowie deren Oberflächenkrümmungen K1, K2 gestaffelt. Wie man erkennt, ist der Abstand a aller Werkstückaufnahmen 21, 22 zur Hauptdrehachse A gleich. Der Au ßendurchmesser d1, d2 der Werkstückaufnahmen 21, 22 ist jeweils gleich groß. Weiterhin ist jede Werkstückaufnahme 21, 22 separat rotatorisch um ihre Spindelachse A1, A2 angetrieben.

Gut erkennbar ist weiterhin, dass die Werkstückaufnahmen 21, 22 radial zur Hauptdrehachse A des Werkstückrevolvers 10 gleichmäßig verteilt angeordnet sind. Dabei stehen die Spindelachsen A1, A2 jeweils im gleichen Winkel zur Hauptdrehachse A. Insbesondere sind die Spindelachsen A1, A2 senkrecht zur Hauptdrehachse A des Werkstückrevolvers 10 ausgerichtet und schneiden diese. Weiterhin liegen die Spindelachsen A1, A2 der Werkstückaufnahmen 21, 22 in einer gemeinsamen Ebene senkrecht zur Hauptdrehachse A sowie letztere mittig zwischen den Werkstückaufnahmen 21, 22.

Auf eine detaillierte Darstellung und Kennzeichnung von Ansaugvorrichtungen an den einzelnen Werkstückaufnahmen 21, 22 wurde verzichtet. Diese können beispielsweise wie in Fig. 2 anhand einer einzigen Werkstückaufnahme 21 gezeigt, ausgebildet sein. Dabei sollten die Ansaugvorrichtungen jeder einzelnen Werkstückaufnahme 21, 22 separat pneumatisch geschaltet werden, sowie in die Werkstückaufnahmefläche 31, 32 eingebrachte Sicken aufweisen, die pneumatisch mit einer Ansaugleitung verbunden sind. Die Ansaugleitung kann ebenso wie eine Stromzufuhr mittig aus dem Werkstückrevolver 10 in einen nicht rotierenden Vorrichtungsteil geführt werden. Nicht dargestellt sind dieser nicht rotierende Vorrichtungsteil, ein Maschinenbett sowie eine Maschinenkapselung.

In jeder der Werkstückaufnahmen 21, 22 sind kreisförmige Brillenglasrohlinge 100 mit optisch wirksamer Aufnahmeseite 101 aufgenommen. Diese Aufnahmeseiten 101 und gegenüberliegende Bearbeitungsseiten 102 sind rotationssymmetrisch. Außerdem entspricht die Anzahl der Werkstückaufnahmen 21, 22 der Anzahl an unterschiedlichen Rohlingtypen T1, T2. Gezeigt sind in der Ansicht zwei unterschiedliche Rohlingtypen T1, T2 mit unterschiedlichen Oberflächenkrümmungen k1, k2 auf der Aufnahmeseite 101. Die Oberflächenkrümmung k1 des ersten Rohlingtyps T1 ist dabei kleiner als der des zweiten Rohlingtyps T2. Je nach Rezept kann zwischen den Rohlingtypen T1, T2 ausgewählt werden.

Durch Drehen des Werkstückrevolvers 10 um dessen Hauptdrehachse A können die Werkstückaufnahmen 21, 22 unterschiedlichen Werkzeugen zugeführt werden. Die weiteren diesbezüglichen Gestaltungsmöglichkeiten der Peripherie des Werkstückrevolvers 10, insbesondere diejenige der Arbeitsbereiche, entsprechen den Ausführungen zu Fig. 1a und 1 b.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Vorrichtung | 81 | Magazin |
| 10 | Werkstückrevolver | | |
| | | 100 | Brillenglasrohling |
| 21 | erste Werkstückaufnahme | 101 | Aufnahmeseite |
| 22 | zweite Werkstückaufnahme | 102 | Bearbeitungsseite |
| 23 | dritte Werkstückaufnahme | 103 | Orientierungsnut |
| 24 | vierte Werkstückaufnahme | 104 | Rezeptlinsenbereich |
| 25 | fünfte Werkstückaufnahme | 105 | Halterandbereich |
| 26 | sechste Werkstückaufnahme | | |
| 31 | erste Werkstückaufnahmefläche | A | Hauptdrehachse |
| 32 | zweite Werkstückaufnahmefläche | A1 | erste Spindelachse |
| 33 | dritte Werkstückaufnahmefläche | A2 | zweite Spindelachse |
| 34 | vierte Werkstückaufnahmefläche | A3 | dritte Spindelachse |
| 35 | fünfte Werkstückaufnahmefläche | A4 | vierte Spindelachse |
| 36 | sechste Werkstückaufnahmefläche | A5 | fünfte Spindelachse |
| | | A6 | sechste Spindelachse |
| 50 | Ansaugvorrichtung | a | Abstand (Werkstückaufnahme-Hauptdrehachse) |
| 51 | Sicken | | |
| 52 | Ansaugleitung | d1 | erster Außendurchmesser (Werkstückaufnahme) |
| | | | |
| 60 | Fräswerkzeug | d2 | zweiter Außendurchmesser (Werkstückaufnahme) |
| 61 | Frässpindel | | |
| 62 | Kugelfräser | K1 | erste Oberflächenkrümmung (Aufnahme) |
| 63 | Werkzeugrevolver | | |
| 64 | zweiter Fräser | K2 | zweite Oberflächenkrümmung (Aufnahme) |
| 70 | Drehwerkzeug | K3 | dritte Oberflächenkrümmung (Aufnahme) |
| 71 | Drehmeißel | | |
| 73 | zweiter Drehmeißel | K4 | vierte Oberflächenkrümmung (Aufnahme) |
| 74 | FASTtoolServo-Antrieb | | |
| | | K5 | fünfte Oberflächenkrümmung (Aufnahme) |
| 80 | Ladevorrichtung | | |
| K6 | sechste Oberflächenkrümmung (Aufnahme) | M1 | erstes Schnittvolumen |
| | | M2 | zweites Schnittvolumen |
| k1 | erste Oberflächenkrümmung (Rohling) | M3 | drittes Schnittvolumen |
| | | T1 | erster Rohlingtyp |
| k2 | zweite Oberflächenkrümmung (Rohling) | T2 | zweiter Rohlingtyp |
| | | T3 | dritter Rohlingtyp |
| k3 | dritte Oberflächenkrümmung (Rohling) | T4 | vierter Rohlingtyp |
| | | T5 | fünfter Rohlingtyp |
| k4 | vierte Oberflächenkrümmung (Rohling) | T6 | sechster Rohlingtyp |
| | | V | Rotationsraum |
| k5 | fünfte Oberflächenkrümmung (Rohling) | V1 | erster Arbeitsbereich |
| | | V2 | zweiter Arbeitsbereich |
| k6 | sechste Oberflächenkrümmung (Rohling) | V3 | dritter Arbeitsbereich |

## Patentansprüche

1. Vorrichtung (1) zur Bearbeitung von Brillenglasrohlingen (100), mit einem um eine Hauptdrehachse (A) drehbar gelagerten Werkstückrevolver (10) mit wenigstens zwei außerhalb der Hauptdrehachse (A) angeordneten sowie um Spindelachsen (A1, A2, A3, A4, A5, A6) drehbar am Werkstückrevolver (10) gelagerten Werkstückaufnahmen (21, 22, 23, 24, 25, 26), wobei jede Werkstückaufnahme (21, 22, 23, 24, 25, 26) eine Werkstückaufnahmefläche (31, 32, 33, 34, 35, 36) mit einer um die Spindelachse (A1, A2, A3, A4, A5, A6) rotationssymmetrischen Oberflächenkrümmung (K1, K2, K3, K4, K5, K6) aufweist, und wobei sich die Oberflächenkrümmungen (K1, K2, K3, K4, K5, K6) der Werkstückaufnahmeflächen (31, 32, 33, 34, 35, 36) unterscheiden.

2. Vorrichtung (1) nach Anspruch 1, **dadurch gekennzeichnet, dass** die Oberflächenkrümmungen (K1, K2, K3, K4, K5, K6) der Werkstückaufnahmeflächen (31, 32, 33, 34, 35, 36) gestaffelt sind.

3. Vorrichtung (1) nach einem der Ansprüche 1 oder 2, **dadurch gekennzeichnet, dass** der Abstand (a) der Werkstückaufnahmen (21, 22, 23, 24, 25, 26) zur Hauptdrehachse (A) gleich ist.

4. Vorrichtung (1) nach einem der Ansprüche 1 bis 3, **dadurch gekennzeichnet, dass** jede Werkstückaufnahme (21, 22, 23, 24, 25, 26) separat rotatorisch um ihre Spindelachse (A1, A2, A3, A4, A5, A6) angetrieben ist.

5. Vorrichtung (1) nach einem der Ansprüche 1 bis 4, **dadurch gekennzeichnet, dass** die Werkstückaufnahmen (21, 22, 23, 24, 25, 26) radial zur Hauptdrehachse (A) des Werkstückrevolvers (10) gleichmäßig verteilt angeordnet sind.

6. Vorrichtung (1) nach einem der Ansprüche 1 bis 5, **dadurch gekennzeichnet, dass** jede Werkstückaufnahme (21, 22, 23, 24, 25, 26) eine Ansaugvorrichtung (50) aufweist.

7. Vorrichtung (1) nach einem der Ansprüche 1 bis 6, **dadurch gekennzeichnet, dass** radial zur Hauptdrehachse (A) Arbeitsbereiche (V1, V2, V3) angeordnet sind, die jeweils ein Schnittvolumen (M1, M2, M3) mit dem Rotationsraum (V) des Werkstückrevolvers (10) aufweisen.

8. Vorrichtung (1) nach Anspruch 7, **dadurch gekennzeichnet, dass** die Arbeitsbereiche (V1, V2, V3) radial zur Hauptdrehachse (A) des Werkstückrevolvers (10) gleichmäßig verteilt angeordnet sind.

9. Vorrichtung (1) nach einem der Ansprüche 7 oder 8, **dadurch gekennzeichnet, dass** in einem ersten Arbeitsbereich (V1) ein Fräswerkzeug (60) mit einem um eine Frässpindel (61) drehbaren und zustellbaren Kugelfräser (62) angeordnet ist.

10. Vorrichtung (1) nach einem der Ansprüche 7 bis 9, **dadurch gekennzeichnet, dass** in einem zweiten Arbeitsbereich (V2) ein Drehwerkzeug (70) mit zustellbarem Drehmeißel (71) angeordnet ist.

11. Vorrichtung nach einem der Ansprüche 7 bis 10, **dadurch gekennzeichnet, dass** in einem dritten Arbeitsbereich (V3) eine Ladevorrichtung (80) zum Laden von Brillenglasrohlingen (100) in die Werkstückaufnahmen (21, 22, 23, 24, 25, 26) angeordnet ist.

12. **Verfahren** zur Bearbeitung von Brillenglasrohlingen (100) mittels einer Vorrichtung nach einem der Ansprüche 1 bis 11, wobei wenigstens zwei Rohlingtypen (T1, T2, T3, T4, T5, T6) mit unterschiedlichen aufnahmeseitigen (101) Oberflächenkrümmungen (k1, k2, k3, k4, k5, k6) auswählbar sind, umfassend die folgenden Schritte:
I. Auswählen eines Rohlingtyps (T1, T2, T3, T4, T5, T6),
II. Auswählen einer Werkstückaufnahme (21, 22, 23, 24, 25, 26) mit einer Werkstückaufnahmefläche (31, 32, 33, 34, 35, 36), deren Oberflächenkrümmung (K1, K2, K3, K4, K5, K6) der Oberflächenkrümmung (k1, k2, k3, k4, k5, k6) der Aufnahmeseite (101) des ausgewählten Rohlingtyps (T1, T2, T3, T4, T5, T6) entspricht,
III. Positionieren der ausgewählten Werkstückaufnahme (21, 22, 23, 24, 25, 26) durch Drehen des die Werkstückaufnahmen (21, 22, 23, 24, 25, 26) halternden Werkstückrevolvers (10) um dessen Hauptdrehachse (A),
IV. Laden eines Brillenglasrohlings (100) des ausgewählten Rohlingtyps (T1, T2, T3, T4, T5, T6) in die ausgewählte und positionierte Werkstückaufnahme (21, 22, 23, 24, 25, 26),
V. Positionieren des geladenen Brillenglasrohlings (100) für eine sich anschließende Bearbeitung (VI.1, VI.2, VI.3, VI.4, VI.5, VI.6) durch Drehen des Werkstückrevolvers (10) um dessen Hauptdrehachse (A).

13. Verfahren nach Anspruch 12, **gekennzeichnet durch** den folgenden Schritt:
VI.1 Einbringen des geladenen Brillenglasrohlings (100) in einen ersten Arbeitsbereich (V1) eines Fräswerkzeugs (60), mit einem um eine Frässpindel (61) drehbaren und zustellbaren Kugelfräser (62), **durch** Drehen des Werkstückrevolvers (10) um dessen Hauptdrehachse (A).

14. Verfahren nach Anspruch 13, **gekennzeichnet durch** den folgenden Schritt:
VI.2 Durchführen eines Außenumfangsprogramms mit dem Fräswerkzeug (60), wobei der Durchmesser des ausgewählten Brillenglasrohlings (100) auf ein Standardmaß gebracht wird.

15. Verfahren nach einem der Ansprüche 13 oder 14, **gekennzeichnet durch** den folgenden Schritt:
VI.3 Durchführen eines Oberflächenbearbeitungsprogramms mit dem Fräswerkzeug (60), wobei die von der Werkstückaufnahme (21, 22, 23, 24, 25, 26) wegzeigende Bearbeitungsseite (102) des Brillenglasrohlings (100) bearbeitet wird.

16. Verfahren nach einem der Ansprüche 13 bis 15, **gekennzeichnet durch** den folgenden Schritt:
VI.4 Durchführen eines Orientierungsnutprogramms mit dem Fräswerkzeug (60), bei dem eine Orientierungsnut (103) in den radialen Umfang des Brillenglasrohlings (100) gefräst wird.

17. Verfahren nach einem der Ansprüche 12 bis 16, **gekennzeichnet durch** den folgenden Schritt:
VI.5 Einbringen des Brillenglasrohlings (100) in einen zweiten Arbeitsbereich (V2) eines Drehwerkzeugs (70) mit zustellbarem Drehmeißel (71, 73) **durch** Drehen des Werkstückrevolvers (10) um dessen Hauptdrehachse (A).

18. Verfahren nach Anspruch 17, **gekennzeichnet durch** den folgenden Schritt:
VI.6 Durchführen eines Oberflächenprogramms mit dem Drehwerkzeug (70), bei dem der Drehmeißel (71, 73) zugestellt sowie der Brillenglasrohling (100) mit der Werkstückaufnahme (21, 22, 23, 24, 25, 26) um die Spindelachse (A1, A2, A3, A4, A5, A6) rotiert werden.

19. Verfahren nach einem der Ansprüche 12 bis 18, **gekennzeichnet durch** den folgenden Schritt:
I.1 Berechnen der Oberflächengeometrie der Bearbeitungsseite (102) des Brillenglasrohlings (100) nach Auswahl des Rohlingtyps (T1, T2, T3, T4, T5, T6) und vor der Bearbeitung (VI.1, VI.2, VI.3, VI.4, VI.5, VI.6) des Brillenglasrohlings (100), insbesondere auf Basis eines Rezepts.

20. Verfahren nach Anspruch 19, **gekennzeichnet durch** den folgenden Schritt:
1.2 Berechnen der Oberflächengeometrie der Bearbeitungsseite (102) des Brillenglasrohlings (100) mit einem zentralen Rezeptlinsenbereich (104) und einen umgebenden sowie sich tangential anschließenden Halterandbereich (105).

21. Verfahren nach einem der Ansprüche 12 bis 20, **gekennzeichnet durch** den folgenden Schritt:
IV.1 Rotieren des Werkstückrevolvers (10) in einen dritten Arbeitsbereich (V3) mit einer Ladevorrichtung (80) zum Laden des ausgewählten Brillenglasrohlings (100) in die ausgewählte Werkstückaufnahme (21, 22, 23, 24, 25, 26),
IV.2 Erzeugen eines Unterdrucks zwischen der Werkstückaufnahmefläche (31, 32, 33, 34, 35, 36) der ausgewählten Werkstückaufnahme (21, 22, 23, 24, 25, 26) und dem zu ladenden Brillenglasrohling (100).

22. **Verwendung** einer Vorrichtung (1) nach einem der Ansprüche 1 bis 11 zur Bearbeitung von Brillenglasrohlingen (100).

## Claims

1. Apparatus (1) for machining spectacle lens blanks (100), comprising a workpiece turret (10) mounted to be rotatable about a main axis of rotation (A), with at least two workpiece receptacles (21, 22, 23, 24, 25, 26) which are arranged outside the main axis of rotation (A) and mounted on the workpiece turret (10) so as to be rotatable about spindle axes (A1, A2, A3, A4, A5, A6), each workpiece receptacle (21, 22, 23, 24, 25, 26) comprising a workpiece receiving surface (31, 32, 33, 34, 35, 36) having a surface curvature (K1, K2, K3, K4, K5, K6) which is rotationally symmetrical about the spindle axis (A1, A2, A3, A4, A5, A6), the surface curvatures (K1, K2, K3, K4, K5, K6) of the workpiece receiving surfaces (31, 32, 33, 34, 35, 36) being different from each other.

2. Apparatus (1) according to claim 1, **characterised in that** the surface curvatures (K1, K2, K3, K4, K5, K6) of the workpiece receiving surfaces (31, 32, 33, 34, 35, 36) are graduated.

3. Apparatus (1) according to one of claims 1 or 2, **characterised in that** the workpiece receptacles (21, 22, 23, 24, 25, 26) are at the same spacing (a) from the main axis of rotation (A).

4. Apparatus (1) according to one of claims 1 to 3, **characterised in that** each workpiece receptacle (21, 22, 23, 24, 25, 26) is separately rotationally driven about its spindle axis (A1, A2, A3, A4, A5, A6).

5. Apparatus (1) according to one of claims 1 to 4, **characterised in that** the workpiece receptacles (21, 22, 23, 24, 25, 26) are uniformly distributed radially with respect to the main axis of rotation (A) of the workpiece turret (10).

6. Apparatus (1) according to one of claims 1 to 5, **characterised in that** each workpiece receptacle (21, 22, 23, 24, 25, 26) comprises a suction device (50).

7. Apparatus (1) according to one of claims 1 to 6, **characterised in that** operating areas (V1, V2, V3) are arranged radially with respect to the main axis of rotation (A), each comprising an intersection volume (M1, M2, M3) with the rotational space (V) of the workpiece turret (10).

8. Apparatus (1) according to claim 7, **characterised in that** the operating areas (V1, V2, V3) are uniformly distributed radially with respect to the main axis of rotation (A) of the workpiece turret (10).

9. Apparatus (1) according to one of claims 7 or 8, **characterised in that** a milling tool (60) fitted with a position-controllable spherical milling cutter (62) rotatable about a milling spindle (61) is arranged in a first operating area (V1).

10. Apparatus (1) according to one of claims 7 to 9, **characterised in that** a lathe (70) fitted with an adjustable lathe tool (71) is arranged in a second operating area (V2).

11. Apparatus according to one of claims 7 to 10, **characterised in that** a loading device (80) for loading spectacle lens blanks (100) into the workpiece receptacles (21, 22, 23, 24, 25, 26) is arranged in a third operating area V3).

12. Method for machining spectacle lens blanks (100) using an apparatus according to one of claims 1 to 11, wherein at least two types of blanks (T1, T2, T3, T4, T5, T6) having different surface curvatures (k1, k2, k3, k4, k5, k6) on the receiving side (101) may be selected, comprising the following steps:
I. Selecting a type of blank (T1, T2, T3, T4, T5, T6),
II. Selecting a workpiece receptacle (21, 22, 23, 24, 25, 26) having a workpiece receiving surface (31, 32, 33, 34, 35, 36), the surface curvature (K1, K2, K3, K4, K5, K6) of which corresponds to the surface curvature (k1, k2, k3, k4, k5, k6) of the receiving side (101) of the selected type of blank (T1, T2, T3, T4, T5, T6),
III. Positioning the selected workpiece receptacle (21, 22, 23, 24, 25, 26) by rotating the workpiece turret (10) holding the workpiece receptacle (21, 22, 23, 24, 25, 26) about the main axis of rotation (A) of said turret,
IV. Loading a spectacle lens blank (100) of the selected type of blank (T1, T2, T3, T4, T5, T6) into the workpiece receptacle (21, 22, 23, 24, 25, 26) which has been selected and brought into position,
V. Positioning the loaded spectacle lens blank (100) for subsequent machining (VI.1, VI.2, VI.3, VI.4, VI.5, VI.6) by rotating the workpiece turret (10) about its main axis of rotation (A).

13. Method according to claim 12, **characterised by** the following step:
VI.1 Moving the loaded spectacle lens blank (100) into a first operating area (V1) of a milling tool (60), fitted with a position-controllable spherical milling cutter (62) rotatable about a milling spindle (61), by rotating the workpiece turret (10) about its main axis of rotation (A).

14. Method according to claim 13, **characterised by** the following step:
VI.2 Carrying out an outer periphery programme with the milling tool (60), whereby the diameter of the selected spectacle lens blank (100) is adjusted to a standard size.

15. Method according to one of claims 13 or 14, **characterised by** the following step:
VI.3 Carrying out a surface machining programme using the milling tool (60), whereby the machining side (102) of the spectacle lens blank (100) facing away from the workpiece receptacle (21, 22, 23, 24, 25, 26) is machined.

16. Method according to one of claims 13 to 15, **characterised by** the following step:
VI.4 Carrying out an orientation groove programme using the milling tool (60), wherein an orientation groove (103) is milled into the radial periphery of the lens blank (100).

17. Method according to one of claims 12 to 16, **characterised by** the following step:
VI.5 Moving the spectacle lens blank (100) into a second operating area (V2) of a lathe (70) fitted with an adjustable lathe tool (71, 73) by rotating the workpiece turret (10) about its main axis of rotation (A).

18. Method according to claim 17, **characterised by** the following step:
VI.6 Carrying out a surface programme using the lathe (70), wherein the lathe tool (71, 73) is moved into position and the spectacle lens blank (100) together with the workpiece receptacle (21, 22, 23, 24, 25, 26) are rotated about the spindle axis (A1, A2, A3, A4, A5, A6)

19. Method according to one of claims 12 to 18, **characterised by** the following step:
I.1 Computing the surface geometry of the machining side (102) of the spectacle lens blank (100) after selecting the type of blank (T1, T2, T3, T4, T5, T6) and prior to the machining (VI.1, VI.2, VI.3, VI.4, VI.5, VI.6) of the spectacle lens blank (100), in particular on the basis of a prescription.

20. Method according to claim 19, **characterised by** the following step:
I.2 Computing the surface geometry of the machining side (102) of the spectacle lens blank (100) having a central prescription lens zone (104) and a surrounding and tangentially adjacent holding rim zone (105).

21. Method according to one of claims 12 to 20, **characterised by** the following step:
IV.1 Rotating the workpiece turret (10) into a third operating area (V3) with a loading device (80) for loading the selected spectacle lens blank (100) into the selected workpiece receptacle (21, 22, 23, 24, 25, 26),
IV.2 Generating a vacuum between the workpiece receiving surface (31, 32, 33, 34, 35, 36) of the selected workpiece receptacle (21, 22, 23, 24, 25, 26) and the spectacle lens blank to be loaded.

22. Use of an apparatus (1) according to one of claims 1 to 11 for machining spectacle lens blanks (100).

## Revendications

1. Dispositif (1) de traitement d'ébauches (100) de verres à lunettes, comprenant une tourelle porte-pièces (10) montée à rotation autour d'un axe de rotation principal (A) avec au moins deux fixations de pièces (21, 22, 23, 24, 25, 26) aménagées en dehors de l'axe de rotation principal (A) ainsi que montées à rotation autour d'axes de broches (A1, A2, A3, A4, A5, A6) sur la tourelle porte-pièces (10), dans lequel chaque fixation de pièce (21, 22, 23, 24, 25, 26) présente une surface de fixation de pièce (31, 32, 33, 34, 35, 36) avec une courbure de surface (K1, K2, K3, K4, K5, K6) à symétrie de rotation autour de l'axe de broche (A1, A2, A3, A4, A5, A6), et dans lequel les courbures de surface (K1, K2, K3, K4, K5, K6) des surfaces de fixation de pièces (31, 32, 33, 34, 35, 36) sont différentes.

2. Dispositif (1) selon la revendication 1, **caractérisé en ce que** les courbures de surface (K1, K2, K3, K4, K5, K6) des surfaces de fixation de pièces (31, 32, 33, 34, 35, 36) sont progressives.

3. Dispositif (1) selon l'une quelconque des revendications 1 ou 2, **caractérisé en ce que** la distance (a) des fixations de pièces (21, 22, 23, 24, 25, 26) à l'axe de rotation principal (A) est égale.

4. Dispositif (1) selon l'une quelconque des revendications 1 à 3, **caractérisé en ce que** chaque fixation de pièce (21, 22, 23, 24, 25, 26) est entraînée séparément en rotation autour son l'axe de broche (A1, A2, A3, A4, A5, A6).

5. Dispositif (1) selon l'une quelconque des revendications 1 à 4, **caractérisé en ce que** les fixations de pièces (21, 22, 23, 24, 25, 26) sont aménagées régulièrement réparties radialement par rapport à l'axe de rotation principal (A) de la tourelle porte-pièces (10).

6. Dispositif (1) selon l'une quelconque des revendications 1 à 5, **caractérisé en ce que** chaque fixation de pièce (21, 22, 23, 24, 25, 26) présente un dispositif d'aspiration (50).

7. Dispositif (1) selon l'une quelconque des revendications 1 à 6, **caractérisé en ce que** sont aménagées radialement par rapport à l'axe de rotation principal (A) des zones de travail (V1, V2, V3) qui présentent respectivement un volume de coupe (M1, M2, M3) avec l'espace de rotation (V) de la tourelle porte-pièces (10).

8. Dispositif (1) selon la revendication 7, **caractérisé en ce que** les zones de travail (V1, V2, V3) sont aménagées réparties régulièrement radialement par rapport à l'axe de rotation principal (A) de la tourelle porte-pièces (10).

9. Dispositif (1) selon l'une quelconque des revendications 7 ou 8, **caractérisé en ce que**, dans une première zone de travail (V1), un outil de fraisage (60) est aménagé avec une fraise sphérique (62) rotative et réglable autour d'une broche de fraise (61).

10. Dispositif (1) selon l'une quelconque des revendications 7 à 9, **caractérisé en ce que**, dans une deuxième zone de travail (V2) est aménagé un outil rotatif (70) avec un outil de tour réglable (71).

11. Dispositif selon l'une quelconque des revendications 7 à 10, **caractérisé en ce que**, dans une troisième zone de travail (V3) est aménagé un dispositif de chargement (80) pour charger des ébauches de verres à lunettes (100) dans les fixations de pièces (21, 22, 23, 24, 25, 26).

12. Procédé de traitement d'ébauches (100) de verres à lunettes au moyen d'un dispositif selon l'une quelconque des revendications 1 à 11, dans lequel au moins deux types d'ébauches (T1, T2, T3, T4, T5, T6) avec différentes courbures de surface (K1, K2, K3, K4, K5, K6) côté fixation (101) peuvent être choisies, le procédé comprenant les étapes consistant à :
I. choisir un type d'ébauche (T1, T2, T3, T4, T5, T6),
II. choisir une fixation de pièce (21, 22, 23, 24, 25, 26) avec une surface de fixation de pièce (31, 32, 33, 34, 35, 36) dont la courbure de surface (K1, K2, K3, K4, K5, K6) correspond à la courbure de surface (k1, k2, k3, k4, k5, k6) du côté de fixation (101) du type d'ébauche choisi (T1, T2, T3, T4, T5, T6),
III. positionner la fixation d'outil choisie (21, 22, 23, 24, 25, 26) par rotation de la tourelle porte-pièces (10) maintenant les fixations de pièces (21, 22, 23, 24, 25, 26) autour de son axe de rotation principal (A),
IV. charger une ébauche de verre à lunettes (100) du type d'ébauche choisi (T1, T2, T3, T4, T5, T6) dans la fixation de pièce choisie et positionnée (21, 22, 23, 24, 25, 256), et
V. positionner l'ébauche de verre à lunettes chargée (100) pour un traitement à venir (VI.1, VI.2, VI.3, VI.4, VI.5, VI.6) par rotation de la tourelle porte-pièces (10) autour de son axe de rotation principal (A).

13. Procédé selon la revendication 12, **caractérisé par** l'étape suivante consistant à :
VI.1 amener l'ébauche de verre à lunettes chargée (100) dans une première zone de travail (V1) d'un outil de fraisage (60), avec une fraise sphérique (62) rotative et réglable autour d'une broche de fraise (61), par rotation de la tourelle porte-pièces (10) autour de son axe de rotation principal (A).

14. Procédé selon la revendication 13, **caractérisé par** l'étape suivante consistant à :
VI.2 réaliser un programme périphérique externe avec l'outil de fraisage (60), dans lequel le diamètre de l'ébauche de verre à lunettes choisie (100) est amené à une mesure standard.

15. Procédé selon l'une quelconque des revendications 13 ou 14, **caractérisé par** l'étape suivante consistant à :
VI.3 réaliser un programme de traitement de surface avec l'outil de fraisage (60), dans lequel le côté d'usinage (102) de l'ébauche de verre à lunettes (100) opposé à la fixation de pièce (21, 22, 23, 24, 25, 26) est usiné.

16. Procédé selon l'une quelconque des revendications 13 à 15, **caractérisé par** l'étape suivante consistant à :
VI.4 réaliser un programme de rainurage d'orientation avec l'outil de fraisage (60), dans lequel une rainure d'orientation (103) est fraisée dans le contour radial de l'ébauche de verre à lunettes (100).

17. Procédé selon l'une quelconque des revendications 12 à 16, **caractérisé par** l'étape suivante consistant à :
VI.5 amener l'ébauche de verre à lunettes (100) dans une deuxième zone de travail (V2) d'un outil rotatif (70) avec un outil de tour réglable (71, 73) par rotation de la tourelle porte-pièces (10) autour de son axe de rotation principal (A).

18. Procédé selon la revendication 17, **caractérisé par** l'étape suivante consistant à :
VI.6 réaliser un programme de surface avec l'outil rotatif (70), dans lequel l'outil de tour (71, 73) est appliqué et l'ébauche de verre à lunettes (100) soumise à une rotation avec la fixation de pièces (21, 22,23, 24, 25, 26) autour de l'axe de broche (A1, A2, A3, A4, A5, A6).

19. Procédé selon l'une quelconque des revendications 12 à 18, **caractérisé par** l'étape suivante consistant à :
I.1 calculer la géométrie de surface du côté d'usinage (102) de l'ébauche de verre à lunettes (100) après le choix du type d'ébauche (T1, T2, T3, T4, T5, T6) et avant l'usinage (VI.1, VI.2, VI.3, VI.4, VI.5, VI.6), en particulier sur la base d'une prescription.

20. Procédé selon la revendication 19, **caractérisé par** l'étape suivante consistant à :
1.2 calculer la géométrie de surface du côté usinage (102) de l'ébauche de verre de lunettes (100) avec une zone de lentille de prescription centrale (104) et une zone de bord d'arrêt périphérique ainsi que se raccordant tangentiellement (105).

21. Procédé selon l'une quelconque des revendications 12 à 20, **caractérisé par** les étapes suivantes consistant à :
IV.1 faire tourner la tourelle porte-pièces (10) dans une troisième zone de travail (V3) avec un dispositif de charge (80) pour charger l'ébauche de verre à lunettes choisie (100) dans la fixation de pièces choisie (21, 22, 23, 24, 25, 26), et
IV.2 produire une dépression entre la surface de fixation de pièces (31, 32, 33, 34, 35, 36) de la fixation de pièces choisie (21, 22, 23, 24, 25, 26) et l'ébauche de verre à lunettes à charger (100).

22. Utilisation d'un dispositif (1) selon l'une quelconque des revendications 1 à 11 pour le traitement d'ébauches de verres à lunettes (100).
